(19)

Europäisches
Patentamt
European
Patent Office
Office européen
des brevets

(11) **EP 2 180 625 A2**

(12) **EUROPEAN PATENT APPLICATION**

(43) Date of publication:
 **28.04.2010 Bulletin 2010/17**

(51) Int Cl.:
 **H04L 1/00** *(2006.01)*

(21) Application number: **09169947.0**

(22) Date of filing: **10.09.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (72) Inventor: **Miyazaki, Shunji**<br>**Kawasaki-shi Kanagawa 211-8588 (JP)** |
| (30) Priority: **21.10.2008 JP 2008271270** | (74) Representative: **Fenlon, Christine Lesley**<br>**Haseltine Lake LLP**<br>**Lincoln House, 5th Floor**<br>**300 High Holborn**<br>**London WC1V 7JH (GB)** |
| (71) Applicant: **Fujitsu Limited**<br>**Kawasaki-shi, Kanagawa 211-8588 (JP)** | |

(54) **Data coding apparatus, system, and method for communication**

(57) A communication apparatus communicates with a receiving apparatus which receives, combines and decodes first and second data sections as part of a coded data block. The communication apparatus includes a controller that controls the ratio of how much part of the second data section overlaps with the first data section according to a difference of communication quality between a first resource used to transmit the first data section and a second resource used to transmit the second data section.

# FIG. 1

EP 2 180 625 A2

**Description**

FIELD

The embodiments described herein relate to an apparatus, system, and method for communication.

BACKGROUND

Radio communication systems have been widely used today, including cellular phone systems and wireless local area networks (wireless LANs). In such a radio communication system, the transmitting apparatus sends data coded with error-detection coding and error-correction coding techniques. The receiving apparatus subjects received data to a decoding process which includes error-correction decoding and error detection. Here the coded data block may have so high a redundancy that the receiving apparatus can reproduce the original information correctly even from a fragment of that data block. Taking advantage of this redundancy, some transmitting apparatuses employ a mechanism of removing several bits from coded data blocks when transmitting them. This removal of coded bits is called "puncturing."

Some radio communication systems produce a plurality of partial data blocks by puncturing a given data block in several ways and send each such piece of data using a different resource. The receiving apparatus thus receives data fragments derived from the single source data block. While some received fragment may be faulty, the receiving apparatus can reconstruct the original data block correctly by decoding a combined set of those fragments.

For example, think of a mobile communication system in which the base station transmits data through a first channel, and a relay station repeats that data through a second channel (see, for example, Japanese Laid-open Patent Publication No. 2007-43690). In such a mobile communication system with a relay station, the mobile station may be able to receive data, not only directly from the base station, but also via a relay station. The mobile station combines those two receptions so that the data can be decoded more successfully.

The relay station may puncture the data block that it has produced by decoding and re-coding received data. Here the relay station may use the same puncturing pattern as the base station has used for the original data block. This means that both the base station and relay station transmit the same portion of a data block (see, for example, J. N. Laneman, D. N. C. Tse and G. W. Wornell, "Cooperative Diversity in Wireless Networks: Efficient Protocols and Outage Behavior", IEEE Transactions on Information Theory, Vol. 50, No. 12, pp. 3062-3080, Dec. 2004). Alternatively, the relay station may use a different puncturing pattern. In this case, the base station and relay station transmit different portions of a given data block (see, for example, T. E. Hunter and A. Nosratinia, "Cooperation Diversity through coding", Proc. IEEE 2002 International Symposium on Information Theory (ISIT), p. 220, June 2002).

The receiving apparatus can enjoy the advantage of a diversity gain by combining a plurality of receive signals (e.g., by adding receive signal levels) that carry the same data content. The receiving apparatus can also obtain an increased coding gain by combining (e.g., concatenating) a plurality of different partial data blocks and thus reconstructing receive data using its increased redundancy. However, which one of those methods is more advantageous depends on the communication quality of resources used for the data transmission. For example, in the case where a plurality of data portions are transmitted by using different resources, the resulting coding gain may also depend on the relative communication quality of those resources.

SUMMARY

It is desirable to provide a communication apparatus, communication system, and communication method which permit a receiving apparatus to obtain an increased gain when it combines and decodes multiple pieces of receive data.

According to embodiments of an aspect of the present invention, there is provided a communication apparatus to communicate with a receiving apparatus which receives, combines and decodes first and second data sections as part of a coded data block. This communication apparatus includes a controller to control a ratio of how much part of the second data section overlaps with the first data section according to a difference of communication quality between a first resource used to transmit the first data section and a second resource used to transmit the second data section.

BRIEF DESCRIPTION OF DRAWING(S)

Preferred features of the present invention will now be described, purely by way of example, with reference to the accompanying drawings, in which:

FIG. 1 illustrates a communication apparatus according to an embodiment;
FIG. 2 illustrates a configuration of a radio communication system according to a first embodiment;

FIG. 3 is a block diagram illustrating a base station according to the first embodiment;
FIG. 4 is a block diagram illustrating a relay station according to the first embodiment;
FIG. 5 is a block diagram illustrating a mobile station according to the first embodiment;
FIG. 6 is a flowchart of a format determination process according to the first embodiment;
FIG. 7 is a sequence diagram illustrating a flow of messages according to the first embodiment;
FIG. 8 illustrates data transmission using simple repetition mode according to the first embodiment;
FIG. 9 illustrates data transmission using selective parity mode according to the first embodiment;
FIG. 10 illustrates another format that the first embodiment may take;
FIG. 11 is a flowchart of a format determination process according to a second embodiment;
FIG. 12 illustrates data transmission using composite mode according to the second embodiment;
FIG. 13 is a first graph representing a relationship between relaying modes and block error rates;
FIG. 14 is a second graph representing a relationship between relaying modes and block error rates;
FIG. 15 illustrates an example of an OFDM frame structure according to a third embodiment;
FIG. 16 is a flowchart of a format determination process according to the third embodiment;
FIG. 17 is a sequence diagram illustrating a flow of messages according to the third embodiment;
FIG. 18 is a block diagram illustrating a relay station according to a fourth embodiment;
FIG. 19 is a flowchart of a format determination process according to the fourth embodiment;
FIG. 20 is a sequence diagram illustrating a flow of messages according to the fourth embodiment;
FIG. 21 is a flowchart of a format determination process according to a fifth embodiment;
FIG. 22 illustrates data transmission according to the fifth embodiment in the case where the relaying operation is stopped;
FIG. 23 illustrates data transmission according to the fifth embodiment in the case where a direct path is disabled;
FIG. 24 is a block diagram illustrating a mobile station according to a sixth embodiment;
FIG. 25 is a sequence diagram illustrating a flow of messages according to the sixth embodiment;
FIG. 26 is a block diagram illustrating a base station according to a seventh embodiment;
FIG. 27 is a block diagram illustrating a mobile station according to the seventh embodiment;
FIG. 28 is a flowchart of a format determination process according to the seventh embodiment;
FIG. 29 is a sequence diagram illustrating a flow of messages according to the seventh embodiment;
FIG. 30 illustrates data transmission using simple repetition mode according to the seventh embodiment;
FIG. 31 illustrates data transmission using selective parity mode according to the seventh embodiment; and
FIG. 32 is a sequence diagram illustrating another message flow according to the seventh embodiment.

DESCRIPTION OF EMBODIMENT(S)

Preferred embodiments of the present invention will now be described in detail below with reference to the accompanying drawings, wherein like reference numerals refer to like elements throughout.

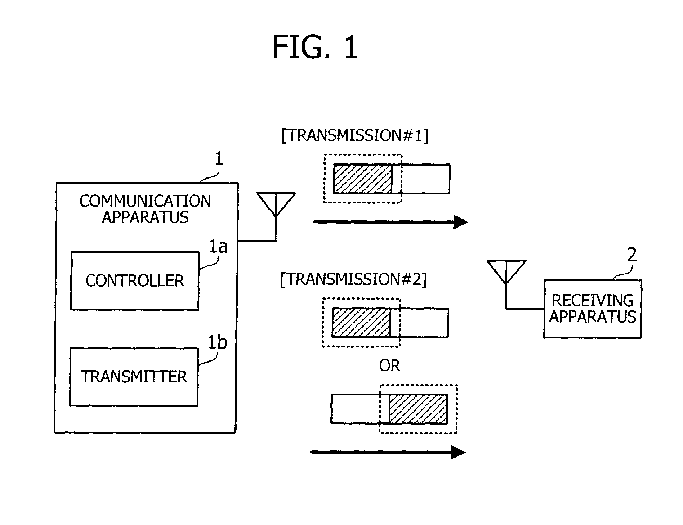

FIG. 1 illustrates a communication apparatus according to an embodiment. The illustrated communication apparatus 1 communicates with a receiving apparatus 2. The receiving apparatus 2 receives first data and second data sections from a communication system in which the communication apparatus 1 is involved. The first and second data sections are portions of a data block that has been coded, which are each created by, for example, puncturing the data block. The receiving apparatus 2 reproduces the original data by combining and decoding the received first data section and second data section. The number of data sections is not limited to two. The receiving apparatus 2 may receive and combine three or more such data sections.

The illustrated communication apparatus 1 includes a controller 1a and a transmitter 1b. The controller 1a obtains a difference of communication quality between a first resource used to transmit the first data section and a second resource used to transmit the second data section. The controller 1a can calculate this difference from feedback data supplied from the receiving apparatus 2 which describes communication quality of the individual resources. Alternatively, the receiving apparatus 2 may be configured to calculate a difference of communication quality, so that the controller 1a in the communication apparatus 1 can receive the result from the receiving apparatus 2.

According to the obtained difference of communication quality, the controller 1a varies the ratio of how much part of the second data section overlaps with the first data section. Let X represent this ratio. The ratio X may be set to, for example, 0% (i.e., no overlaps) or to 100% (i.e., the first and second data sections exactly match with each other). The ratio X may also be set to 0%<X<100% (i.e., the first data section partly overlaps with the second data section). The value of X may be static or dynamic. In the former case, the controller 1a may previously select a value from among 0%, 100%, and X%.

For example, the controller 1a chooses 0% (no overlaps) for the ratio when the difference of communication quality is smaller than a given threshold, and 100% (exact match) when the difference of communication quality is equal to or greater than the threshold. This implementation reflects the fact that, when two received data sections have a large difference in quality, their combination may not be redundant enough to yield a desired coding gain. In such situations, the diversity combining would be advantageous in terms of the resulting gain.

The transmitter 1b produces the first data section from a coded data block by applying a puncturing process and the like to that block, according to the ratio controlled by the controller 1a. The transmitter 1b transmits the resulting first data section by using a first resource, as indicated by a label "TRANSMISSION #1" in FIG. 1. The transmitter 1b also produces the second data section from the data block in a similar way and transmits it by using a second resource, as indicated by another label "TRANSMISSION #2" in FIG. 1. Here either or both of the first and second data sections may be transmitted by another communication apparatus (not illustrated in FIG. 1), in which case the transmitter 1b transmits control parameters indicating the above-described ratio to that additional communication apparatus. An example of such a communication apparatus is an intermediate network device, or relaying apparatus, that is placed between the communication apparatus 1 and receiving apparatus 2 to forward data from the former to the latter.

The term "resource" refers to, for example, radio resources designated by their frequency bands and time slots. The first and second resources may be on different frequency bands or on the same frequency band. Likewise, the first and second resources may be on different time slots or on the same time slot. For example, at least different time slots are used as the first and second resources in the case where the communication apparatus 1 is configured to transmit the second data section only when the receiving apparatus 2 requests retransmission in response to the first data section.

As can be seen from the above description, the controller 1a in the proposed communication apparatus 1 controls the ratio of an overlapping portion of first and second data sections according to the difference of communication quality between a first resource used to transmit the first data section and a second resource used to transmit the second data section. This feature improves the gain that is obtained by combining the first and second data sections at the receiving end, thus making it possible to transmit data more efficiently. For example, a smaller ratio of overlapping portions yields a larger coding gain, whereas a larger ratio of overlapping portions yields a larger diversity gain. The proposed technique determines what ratio is advantageous, based on this relationship between coding gain and diversity gain. The above-described data transmission control may be applied to, for example, mobile communication systems, fixed wireless communication systems, and other communication systems. The following discussion provides more details of the proposed technique, assuming a mobile communication system as an example implementation.

First Embodiment

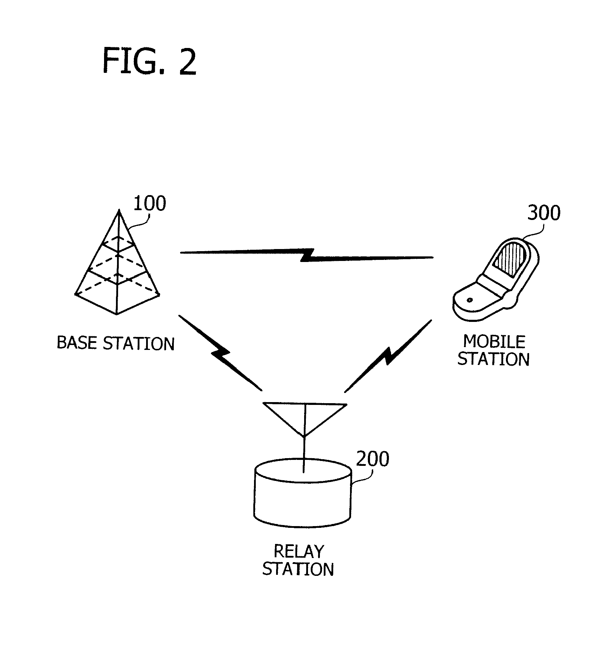

FIG. 2 illustrates a configuration of a radio communication system according to a first embodiment. This radio communication system includes a base station 100, a relay station 200, and a mobile station 300. The base station 100 corresponds to what has been discussed as a communication apparatus 1 in FIG. 1. The mobile station 300 corresponds to what has been discussed as a receiving apparatus 2 in FIG. 1.

The base station 100 is a radio communication device capable of communicating wirelessly with the mobile station 300 visiting its radio coverage area, or cell. The base station 100 transmits data addressed to the mobile station 300 by using radio resources of a source-destination (SD) link connecting the base station 100 to the mobile station 300.

The relay station 200 is an intermediary network device providing radio links to forward data from the base station 100 to the mobile station 300 and vice versa. The relay station 200 receives data that the base station 100 has transmitted wirelessly with a destination address specifying the mobile station 300. The relay station 200 then repeats that data to the mobile station 300 by using radio resources of a relay-destination (RD) link connecting the relay station 200 to the mobile station 300.

The mobile station 300 is a radio terminal device, (e.g., cellular phone) capable of communicating wirelessly with the base station 100 and relay station 200. The mobile station 300 may receive data addressed to itself through either SD link or RD link or both. In the case where the data arrives through both SD and RD links, the mobile station 300 combines and decodes data signals received from the two links. This type of data transmission techniques is sometimes called "cooperative diversity."

The example system illustrated in FIG. 2 allows the base station 100 to reach the mobile station 300 through one direct path and one relay path. It is also possible to place a plurality of relay stations to provide a plurality of relay paths. Those relay stations may alternatively constitute a single relay path that delivers data from one relay station to the next relay station. In some cases, no direct path may be available, and the mobile station 300 can only be reached through a relay path.

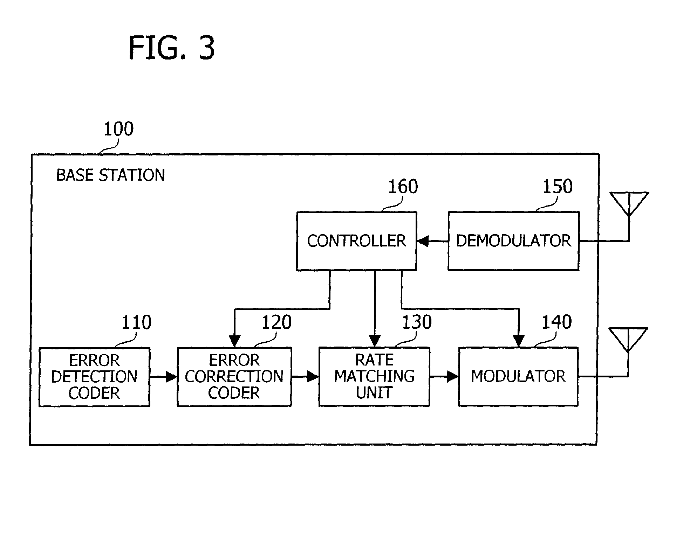

FIG. 3 is a block diagram illustrating the base station 100 according to the first embodiment. The illustrated base station 100 includes an error detection coder 110, an error correction coder 120, a rate matching unit 130, a modulator 140, a demodulator 150, and a controller 160. The controller 160 corresponds to what has been discussed as a controller 1a in FIG. 1.

The error detection coder 110 is activated when there is user data addressed to the mobile station 300. User data may be organized in units for transmission, such as those called "protocol data units" (PDUs). The error detection coder 110 adds check bits to each block of such a data unit for later use in detecting data error. The resulting data block with check bits is supplied to the error correction coder 120.

The error correction coder 120 applies an error correction coding process to the data block received from the error detection coder 110. Which coding technique to use in this process may have been determined previously, or may be specified by the controller 160. The applicable error correction coding techniques include, but not limited to, convolutional coding, convolutional turbo coding, and low-density parity check (LDPC) coding. The resulting coded data block contains systematic bits (information bits) and parity bits. When the code rate at that time is 1/3, the ratio of systematic bits to parity bits is 1:2. The error correction coder 120 outputs such an error-correction coded data block to the rate matching unit 130.

The rate matching unit 130 maps the data block received from the error correction coder 120 onto radio frames. In the case where the data block exceeds the capacity of a radio resource available for data transmission, the rate matching unit 130 performs "puncturing," i.e., the process of removing some bits of a given data block to use the remaining bit string for transmission. On the other hand, in the case where the data block is within the radio resource size, the rate matching unit 130 performs "repetition," i.e., the process of duplicating at least a portion of the bit string of a given data block. The rate-matched bit string is then supplied from the rate matching unit 130 to the modulator 140.

According to the present embodiment, the error correction coder 120 is supposed to produce a data block with a high redundancy. The rate matching unit 130 thus punctures a part of the bit string to achieve the rate matching. Which part to puncture is specified by the controller 160.

The modulator 140 modulates a transmission signal with the bit string supplied from the rate matching unit 130. The modulation method used in this process may have been determined previously, or may be specified by the controller 160. For example, the modulator 140 may use quadrature phase shift keying (QPSK), 16 quadrature amplitude modulation (16QAM), or other digital modulation techniques. The modulator 140 provides the modulated transmission signal to a wireless transmitter (not illustrated), so that the signal will be transmitted as radio waves from an antenna. The base station 100 may use a single antenna for both transmission and reception of radio signals or may employ separate antennas for transmission and reception.

The demodulator 150 demodulates a signal received by an antenna and a wireless receiver (not illustrated). Particularly, the demodulated signal contains feedback data from the mobile station 300, which indicates communication quality of SD and RD links. The demodulator 150 supplies this feedback data to the controller 160.

The controller 160 determines a modulation and coding scheme (MCS) based on the communication quality of SD and RD links indicated by the feedback data supplied from the demodulator 150. The modulation and coding scheme specifies, for example, a coding method, code rate, puncturing scheme, and modulation method. The controller 160 thus notifies the error correction coder 120 of which coding method and code rate to use. The controller 160 also informs the rate matching unit 130 of which puncturing scheme to use, and the modulator 140 of which modulation method to use. Instead of determining those methods and schemes adaptively to the communication quality, all or a few of the coding method, code rate, and modulation method may be fixed to a specific choice.

The controller 160 also produces some control parameters that specify a puncturing scheme (relaying mode) that the relay station 200 is supposed to take. The base station 100 and relay station 200 may use the same puncturing scheme or different puncturing schemes. In the former case, the mobile station 300 receives the same data from two senders. In the latter case, the mobile station 300 receives different data from two senders. The controller 160 passes the produced control parameters to the modulator 140, so that they will be transmitted to the relay station 200.

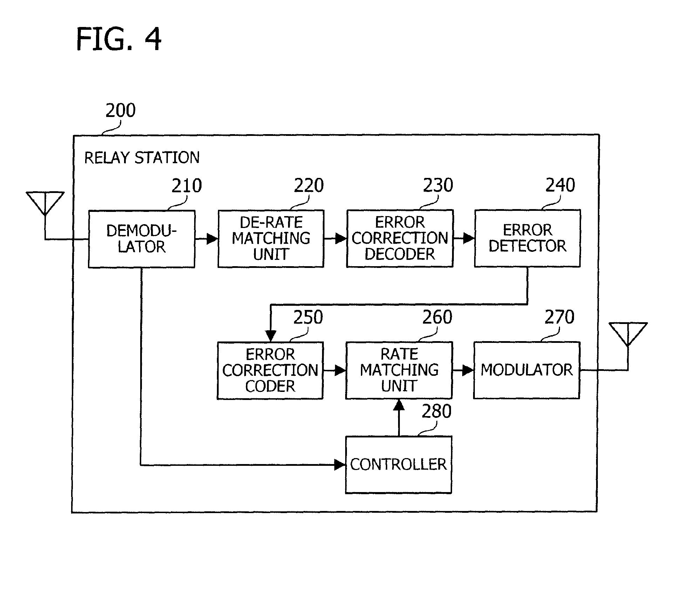

FIG. 4 is a block diagram illustrating the relay station 200 according to the first embodiment. The illustrated relay station 200 includes a demodulator 210, a de-rate matching unit 220, an error correction decoder 230, an error detector 240, an error correction coder 250, a rate matching unit 260, a modulator 270, and a controller 280.

The demodulator 210 demodulates a signal received from the base station 100 via an antenna and a wireless receiver (not illustrated). Specifically, the demodulator 210 reproduces user data contained in the received signal by using a demodulation method which is determined previously or specified by some parameters received together with the user data from the base station 100. The demodulator 210 then sends the bit string of the reproduced user data to the de-rate matching unit 220. The demodulator 210 also extracts, from the received signal, control parameters indicating a specific relaying mode and sends them to the controller 280.

The de-rate matching unit 220 receives a reproduced bit string from the demodulator 210. The de-rate matching unit 220 subjects this bit string to an inverse process of the rate matching performed at the base station 100, thereby reconstructing the original data block. For example, in the case where the base station 100 has performed repetition of transmit data, the de-rate matching unit 220 combines corresponding portions of the received bit string by overlaying one on another. In the case where the base station 100 has performed puncturing, the de-rate matching unit 220 complements the received bit string by adding appropriate dummy bits to the removed portion of the bit string. These operations are referred to as a de-rate matching process. The de-rate matching unit 220 supplies the error correction decoder 230 with a data block reconstructed as a result of the de-rate matching process. As noted earlier, the present embodiment assumes that the base station 100 has punctured transmit data blocks, rather than producing a repetition of such blocks.

The error correction decoder 230 applies an error correction process to the data block received from the de-rate matching unit 220 by using a decoding method which is determined previously or specified by parameters received together with the user data from the base station 100. The error-corrected data block, which no longer has parity bits, is directed to the error detector 240.

The error detector 240 verifies the data block supplied from the error correction decoder 230 with reference to the check bits added at the base station 100. In the case where an error is found during this process, the error detector 240 may request the base station 100 to retransmit the data. The error detector 240 sends an error-free data block to the error correction coder 250. Note that this data block contains check bits, which may be the bits originally included in the received signal or may be a new set of check bits that are recreated.

The error correction coder 250 applies an error-correction coding process to the data block supplied from the error detector 240. This error correction coding may use the same method as the base station 100 has used. Alternatively, the error correction coder 250 may use a different coding method. The resulting data block, now containing systematic bits and parity bits, is sent to the rate matching unit 260.

The rate matching unit 260 maps the data block received from the error correction coder 250 onto radio frames of RD link by using the technique of puncturing or repetition. Note again that the present embodiment assumes the use of puncturing, rather than repetition. Specifically, the controller 280 specifies which part of the bit string of a given data block should be extracted. The rate matching unit 260 punctures the data block and sends this rate-matched bit string to the modulator 270.

The modulator 270 modulates a transmission signal with the bit string supplied from the rate matching unit 260. This modulation may use the same method as the base station 100 has used. Alternatively, it may use a different modulation method. The modulator 270 provides the modulated transmission signal to a wireless transmitter (not illustrated), so that the signal will be transmitted as radio waves from an antenna. The relay station 200 may use a single antenna for both transmission and reception of radio signals or may employ separate antennas for transmission and reception.

The controller 280 controls puncturing operations at the rate matching unit 260, based on control parameters supplied from the demodulator 210 which specify what relaying mode to use. In the relay station 200, its rate matching unit 260 may extract the same part of the bit string of a given data block as the base station 100 does. Or the rate matching unit 260 may extract a different part of the bit string. Depending on the relaying modes, the relay station 200 may simply forward received signals without decoding or re-coding them.

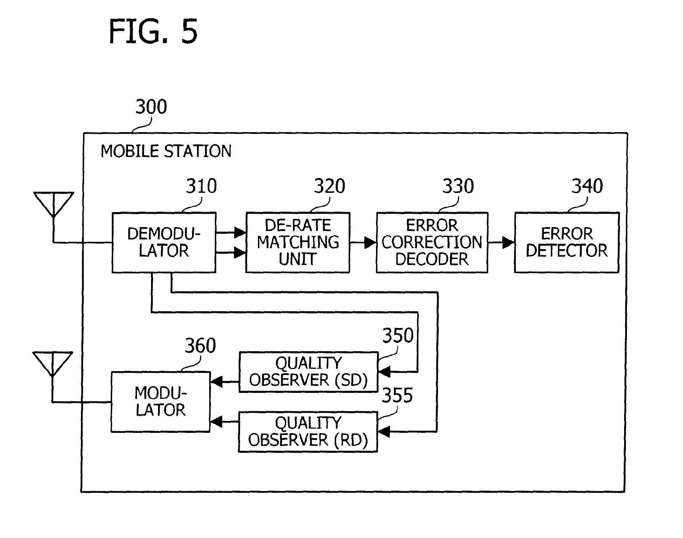

FIG. 5 is a block diagram illustrating a mobile station according to the first embodiment. The illustrated mobile station 300 includes a demodulator 310, a de-rate matching unit 320, an error correction decoder 330, an error detector 340, quality observers 350 and 355, and a modulator 360.

The demodulator 310 demodulates an SD link signal and an RD link signal received via an antenna and a wireless receiver (not illustrated), thereby extracting a bit string from each received signal. This demodulation is executed with a demodulation method which is determined previously or specified by some parameters received together with user data. The demodulator 310 then sends the extracted bit strings to the de-rate matching unit 320. The demodulator 310 also extracts some known signals from the received SD and RD link signals. The extracted known signal of SD link is then supplied to one quality observer 350 and that of RD link to another quality observer 355.

The de-rate matching unit 320 combines together the extracted bit strings of SD and RD links to reconstruct a part or whole of the original data block. Specifically, the de-rate matching unit 320 overlays one bit string on another bit string in the case where the two bit strings derive from the same portion of the original data block. In the case where the two bit strings derive from different portions of the original data block, the de-rate matching unit 320 concatenates them into one bit string. The decision of which case to apply is made by, for example, consulting a piece of information received together with the user data from the base station 100 or relay station 200. If the resulting bit string still lacks some original bits, the de-rate matching unit 320 compensates for that lack by adding some appropriate dummy bits. The de-rate matching unit 320 then supplies the resulting data block to the error correction decoder 330.

The error correction decoder 330 applies an error correction process to the data block received from the de-rate matching unit 320 by using a decoding method which is determined previously or specified by parameters received together with user data. The error-corrected data block, which no longer has parity bits, is directed to the error detector 340.

The error detector 340 verifies the data block supplied from the error correction decoder 330 with reference to check bits added in that block. In the case where an error is found during this process, the error detector 340 may request the base station 100 to retransmit the data. The error-checked data block no longer has check bits. The error detector 340 then sends this data block to an appropriate data handler (not illustrated) which is selected according to the type of its data content.

The quality observers 350 and 355 examine the known signals supplied from the demodulator 310 to measure the communication quality of downlink channels (i.e., links in the direction from base station 100 to mobile station 300). Specifically, one quality observer 350 measures communication quality of the SD link by examining a known signal received through that link and sends the measurement result as feedback data to the modulator 360. Likewise, the other quality observer 355 measures communication quality of the RD link by examining a known signal received through that link and sends the measurement result as feedback data to the modulator 360.

As a quality metric for communication links, the quality observers 350 and 355 may observe the signal to noise ratio (SNR) or the signal to interference and noise ratio (SINR). The feedback data mentioned above may be provided as a channel quality indicator (CQI) which represents a quality value in the form of a discrete number with a predetermined bit length.

The modulator 360 modulates the feedback data received from the quality observers 350 and 355 for transmission to the base station 100 via a wireless transmitter (not illustrated) and an antenna. This transmission may deliver the quality information of both SD and RD links at a time. Or alternatively, the SD-link quality information may be transmitted separately from the RD-link quality information at different time instants. The mobile station 300 may use a single antenna for both transmission and reception of radio signals or may employ separate antennas for transmission and reception.

The relaying modes used in the base station 100 and relay station 200 may have some variations. For example, the base station 100 and relay station 200 may be configured to extract the same portion of a data block. This scheme will be referred to as a "simple repetition mode" in the following description. An example of this simple repetition mode is found in the following literature:

J. N. Laneman, D. N. C. Tse and G. W. Wornell, "Cooperative Diversity in Wireless Networks: Efficient Protocols and Outage Behavior", IEEE Transactions on Information Theory, Vol. 50, No. 12, pp. 3062-3080, 2004

The base station 100 and relay station 200 may also be configured to extract different portions of a data block. This scheme will be referred to as a "selective parity mode" in the following description. An example of this selective parity mode, particularly the case of a data block divided into two sections, is discussed in the following literature:

T. E. Hunter and A. Nosratinia, "Cooperation Diversity through coding", Proc. IEEE 2002 International Symposium on Information Theory (ISIT), p. 220, 2002

The base station 100 determines a modulation and coding scheme (e.g., code rate and modulation method) in an adaptive manner, taking into consideration the communication quality of both SD and RD links. The following description will be directed to how the base station 100 makes this adaptive decision. One possible method begins with estimating the amount of mutual information (MI) or received bit information rate (RBIR) of SD and RD links as a whole, based on the observed communication quality of those links, assuming various modulation and coding schemes one by one. The method then chooses a modulation and coding scheme that is expected to maximize the value of MI or RBIR. See, for example, the following references for details of MI and RBIR:

R. G. Gallager, "Information Theory and Reliable Communication"

L. Wan, S. Tsai and M. Almergn, "A fading-insensitive performance metric for a unified link quality model", IEEE 2006 Wireless Communications and Networking Conference (WCNC), Vol. 4, pp. 2110-2114, 2006

As another possible method, the base station 100 may determine an appropriate modulation and coding scheme according to an effective communication quality (e.g., effective SNR) of SD and RD links as a whole, based on the observed communication quality of those links. For example, the effective SNR may be defined by the following formula:

$$\gamma = \alpha_2 \, F^{-1}\left(\frac{1}{N}\sum_{i=0}^{N-1} F\left(\frac{\gamma_i}{\alpha_1}\right)\right) \quad \ldots \ldots (1)$$

where $\alpha_1$ and $\alpha_2$ are parameters dependent on the relaying mode used, $F(x)$ is a function dependent on the relaying mode used, $N$ represents the number of links (e.g., $N=2$ in FIG. 2), and $\gamma_i$ represents each link's SNR.

In the case of simple repetition mode, the mobile station 300 adds (or overlays) $N$ instances of received bit strings, thus enjoying the advantage of diversity gains. Accordingly, the effective SNR of multiple links can approximately be a sum of SNRs of individual links. That is, the effective SNR $\gamma_0$ in the case of simple repetition mode is defined by substituting $\alpha_1=1$, $\alpha_2=N$, and $F(x)=x$ into formula (1) as follows:

$$\gamma_0 = \sum_{i=0}^{N-1} \gamma_i \qquad \ldots \ldots (2)$$

Selective parity mode, on the other hand, enables the mobile station 300 to combine $N$ instances of received bit strings into a longer bit string. This means that the data will have an increased redundancy (e.g., an increased number of parity bits), which permits the decoding process to yield a greater coding gain. Based on the exponential effective SNR mapping (EESM) technique, the effective SNR $\gamma_1$ in the case of selective parity mode is defined by substituting $\alpha_1 = \alpha_2 = \beta$ and $F(x) = e^{-x}$ into formula (1) as follows:

$$\gamma_1 = -\beta \log \left( \frac{1}{N} \sum_{i=0}^{N-1} \exp \left( -\frac{\gamma_i}{\beta} \right) \right) \qquad \ldots \ldots (3)$$

where $\beta$ is a parameter dependent on the modulation and coding scheme that is used.

See, for example, the following literature for details of effective communication quality:

K. Brueninghaus, et al., "Link performance models for system level simulations of broadband radio access systems", IEEE 16th International Symposium on Personal, Indoor and Mobile Radio Communications (PIMRC), Vol. 4, pp. 2306-2311, 2005

As can be seen from the above discussion, the present embodiment calculates an effective communication quality of radio links, including SD and RD links as a whole, by using an appropriate formula depending on which relaying mode is selected. Based on this effective communication quality, the present embodiment determines a modulation and coding scheme, including code rate and modulation method, in an adaptive manner. The following section will now discuss the case where the base station 100 uses effective SNR for its determination of modulation and coding schemes.

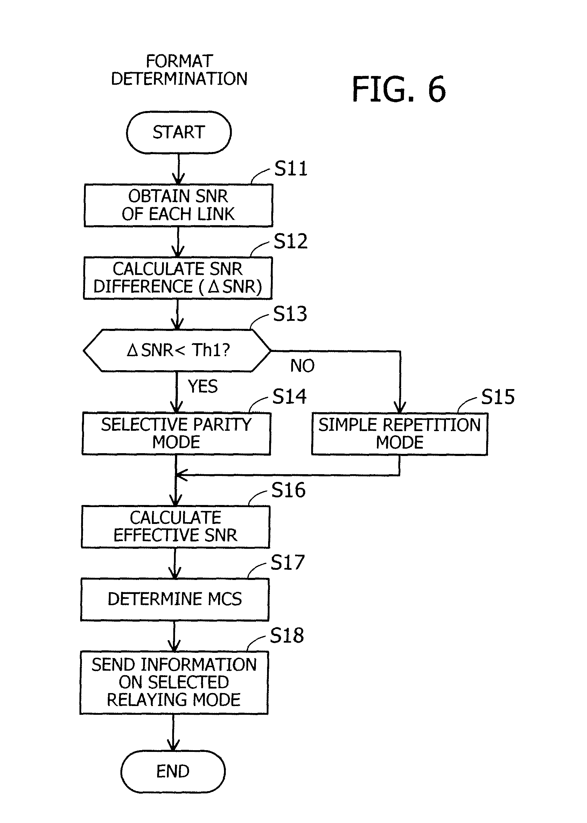

In the above-described radio communication system, various processes are executed as will be described in detail below. FIG. 6 is a flowchart of a format determination process according to the first embodiment. This process is executed repetitively in the base station 100, which includes the following steps:

(Step S11) The controller 160 obtains feedback data indicating SNR of each link (i.e., SD link and RD link) which has been measured at the mobile station 300. The controller 160 may receive such information about different links one at a time or all at once.

(Step S12) The controller 160 calculates a difference of SNR between the relay-path link (RD link) and the direct-path link (SD link). More specifically, the controller 160 calculates ($\gamma_1 - \gamma_0$) as an SNR difference ($\Delta$SNR), where $\gamma_0$ represents SNR of SD link and $\gamma_1$ represents SNR of RD link.

(Step S13) The controller 160 determines whether the SNR difference calculated at step S12 is smaller than a predetermined threshold Th1. If so, the process advances to step S14. If not, the process proceeds to step S15.

(Step S14) The controller 160 chooses selective parity mode as the relaying mode. This choice is based on the knowledge that, when the SNR difference is relatively small, selective parity mode provides a coding gain exceeding the diversity gain that could be obtained with simple repetition mode under the same condition. The process then proceeds to step S16.

(Step S15) The controller 160 chooses simple repetition mode as the relaying mode. This choice is based on the knowledge that, when the SNR difference is very large, selective parity mode is unable to provide sufficient coding gain, and the diversity gain of simple repetition mode is thus advantageous. The process then proceeds to step S16.

(Step S16) The controller 160 calculates an effective SNR from given SNR values of SD and RD links by using a formula corresponding to the relaying mode selected at step S14 or S15. For example, the foregoing formulas (2) and (3) may be used in this calculation.

(Step S17) According to the effective SNR calculated at step S16, the controller 160 determines an appropriate modulation and coding scheme (MCS), which specifies code rate, modulation method, and the like. To this end, the base station 100 may have a table previously defined to provide the association between effective SNR values and applicable MCSs. The controller 160 consults this table to select an appropriate MCS corresponding to the given effective SNR. According to the selected MCS, the controller 160 controls the error correction coder 120, rate matching unit 130, and modulator 140.

(Step S18) The controller 160 produces control parameters indicating the relaying mode that has been determined at step S14 or S15. The produced control parameters are transmitted to the relay station 200 via the modulator 140.

The above steps permit the base station 100 to receive information describing communication quality of SD and RD links from the mobile station 300. Then according to the difference of communication quality between those two links, the base station 100 selects either simple repetition mode or selective parity mode and notifies the relay station 200 of the selected relaying mode. The relay station 200 punctures transmit data according to the relaying mode specified by the base station 100. That is, the relay station 200 extracts a data section from a given data block just in the same way as the base station 100 in the case of simple repetition mode. In the case of selective parity mode, the base station 100 and relay station 200 extract different data sections from a given data block.

The base station 100 may be configured to select relaying modes on an individual data block basis or at regular or irregular intervals. Such selection may be repeated at the same intervals as the decision of modulation and coding schemes, or at different intervals. When there are two or more relay paths, the relaying mode may be determined on the basis of SNR differences specific to the individual relay paths. It may also be possible to configure the system such that every relay path between the base station 100 and mobile station 300 will share the same decision of relaying mode.

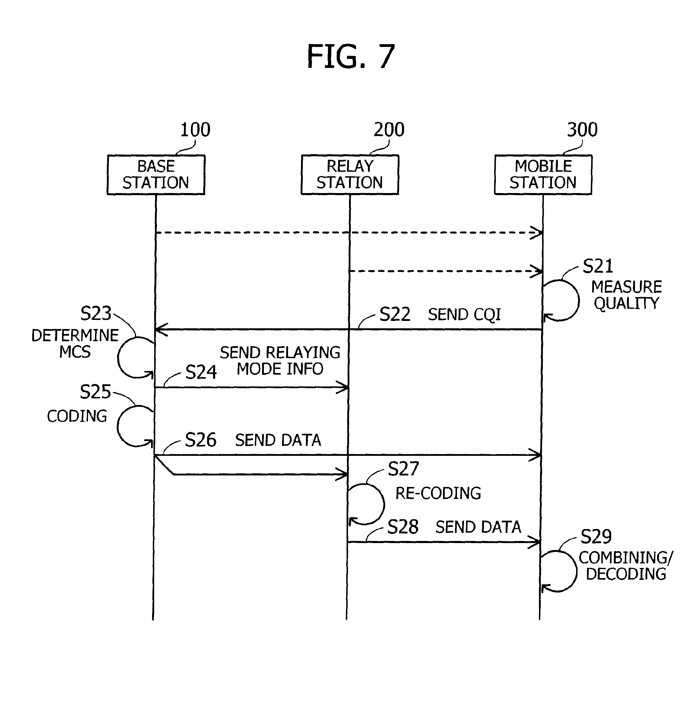

FIG. 7 is a sequence diagram illustrating a flow of messages according to the first embodiment. The process illustrated in FIG. 7 includes the following steps:

(Step S21) The mobile station 300 measures SNR of SD link by observing incoming signals from the base station 100. The mobile station 300 also measures SNR of RD link by observing incoming signals from the relay station 200. Those two SNRs may be measured at the same time or at different time instants.

(Step S22) For each of the SD link and RD link, the mobile station 300 sends feedback data to the base station 100. This feedback data carries CQI values representing the measured SNRs of SD and RD links. Those two CQIs may be delivered together at the same time, or may be transmitted separately at different time instants.

(Step S23) Based on the feedback data received at step S22, the base station 100 determines an appropriate modulation and coding scheme, besides selecting an appropriate relaying mode (e.g., simple repetition mode or selective parity mode).

(Step S24) The base station 100 informs the relay station 200 of the relaying mode selected at step S23. It is possible for the base station 100 to send this information to the relay station 200 before determining which modulation and coding scheme to use.

(Step S25) According to the modulation and coding scheme determined at step S23, the base station 100 subjects a given data block to error correction coding, rate matching, and modulation processes, thereby producing a transmit signal. Here the base station 100 may use some fixed coding method, code rate, or modulation method, or all of them.

(Step S26) By using a radio resource of SD link, the base station 100 outputs the transmit signal produced at step S25. The radio waves transmitted from the base station 100 reach both the relay station 200 and mobile station 300.

(Step S27) Upon receipt of the signal transmitted from the base station 100 at step S26, the relay station 200 subjects the signal to demodulation, de-rate matching, and decoding processes, so as to reproduce the original data block. The relay station 200 then applies another series of error correction coding, rate matching, and modulation processes to that data block, thereby producing a transmit signal. During this course, the relay station 200 punctures the data block according to the relaying mode specified at step S24.

(Step S28) By using a radio resource of RD link, the relay station 200 outputs the transmit signal produced at step S27, thus transmitting it via radio waves. The transmit signal from the relay station 200 reaches the mobile station 300.

(Step S29) The mobile station 300 demodulates the signal received from the base station 100 at step S26, as well as the signal received from the relay station 200 at step S28. The mobile station 300 combines those two demodulated bit strings into a single reproduced bit string by overlaying one on the other or concatenating one to the other, depending on the relaying mode being used.

As can be seen from the above sequence, the mobile station 300 informs the base station 100 of CQIs representing measured SNRs of SD and RD links. Based on the provided CQIs, the base station 100 selects a specific relaying mode and notifies the relay station 200 of that selection. The base station 100 also determines a modulation and coding scheme from the CQIs and transmits data by using a radio resource of SD link. The relay station 200 forwards data according to the relaying mode specified by the base station 100. The mobile station 300 combines data received from the base station 100 and relay station 200.

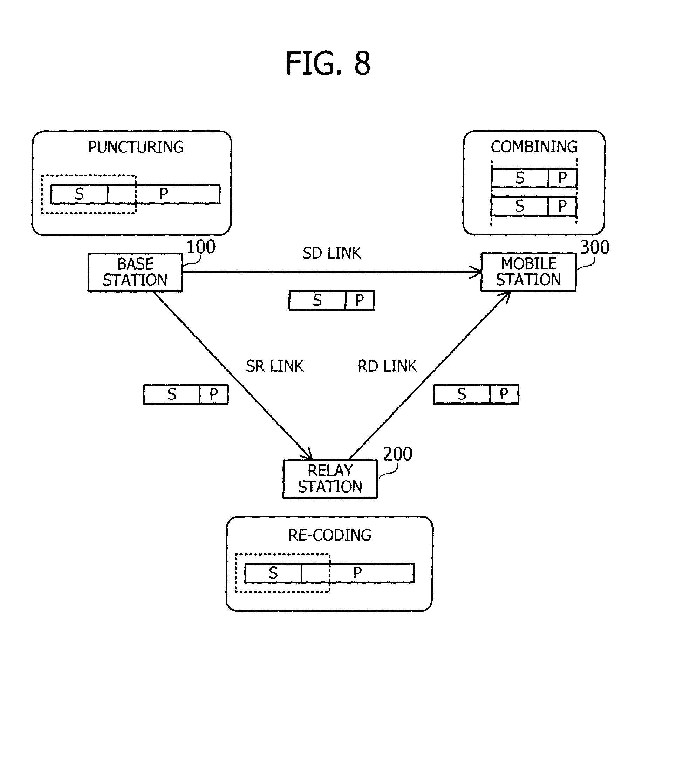

FIG. 8 illustrates data transmission according to the first embodiment, particularly in the case where the base station 100 has selected simple repetition mode as the relaying mode. It is assumed here that each error-correction coded data block contains systematic bits and parity bits at the ratio of 1:2, and that the capacity of a single data transmission is equivalent to one half of the data block length.

With its puncturing function, the base station 100 extracts all systematic bits and a portion of parity bits from a given data block and sends the extracted bit string by using a radio resource of SD link. Upon receipt of this bit string from the base station 100, the relay station 200 subjects it to decoding and re-coding processes. In the course of those processes, the relay station 200 extracts the same section of the bit string as the base station 100 has done from the original data block (i.e., all systematic bits and a portion of parity bits). The relay station 200 transmits the extracted bit string by using a radio resource of RD link.

The mobile station 300 combines two bit strings received from the base station 100 and relay station 200 into a single bit string by, for example, adding their corresponding receive signal levels and decodes the combined bit string. This diversity reception brings about an increased gain, enabling the mobile station 300 to reduce the block error rate of receive signals. Preferably, the bit strings that the mobile station 300 receives contain a large portion of the systematic bits. For example, the bit strings preferably contain all systematic bits as discussed above.

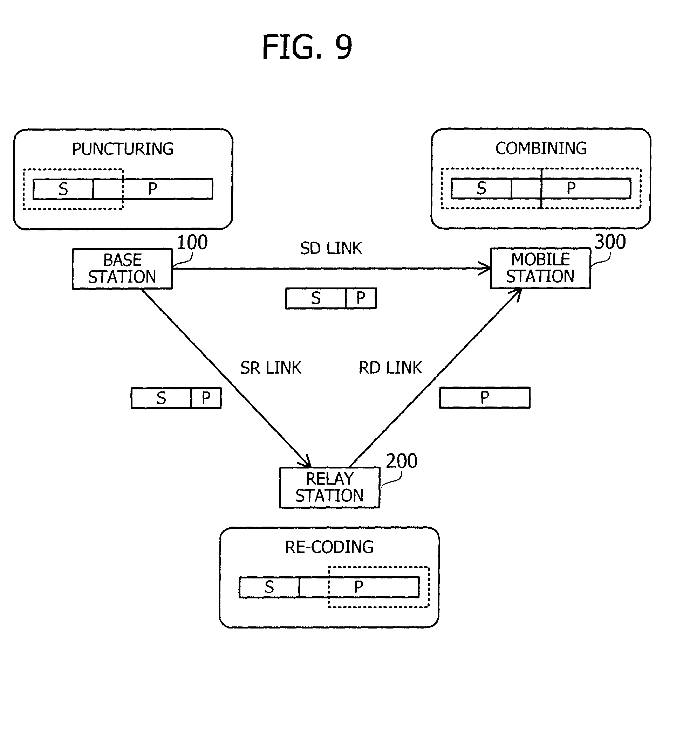

FIG. 9 illustrates data transmission according to the first embodiment, particularly in the case where the base station 100 has selected selective parity mode as the relaying mode. Similarly to the foregoing case of FIG. 8, it is assumed that each error-correction coded data block contains systematic bits and parity bits at the ratio of 1:2, and that the capacity of a single data transmission is equivalent to one half of the data block length.

With its puncturing function, the base station 100 extracts all systematic bits and a portion of parity bits from a given data block and sends the extracted bit string by using a radio resource of SD link. Upon receipt of this bit string from the base station 100, the relay station 200 subjects it to decoding and re-coding processes. In the course of those processes, the relay station 200 extracts a portion of the bit string that the base station 100 has removed from the original data block (i.e., the remaining portion of parity bits). The relay station 200 transmits the extracted bit string by using a radio resource of RD link.

The mobile station 300 combines a bit string received from the base station 100 with a bit string received from the relay station 200 into a single bit string by, for example, appending the latter to the former and decodes the combined bit string. This processing permits the mobile station 300 to receive and use more parity bits to correct errors, meaning that the mobile station 300 can enjoy a higher coding gain and reduce the block error rate of receive signals. Preferably, the bit strings that the mobile station 300 receives contain a large portion of the systematic bits.

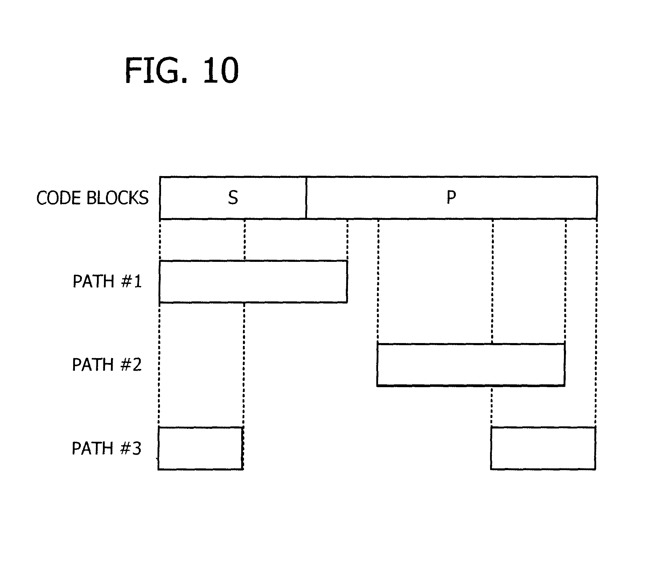

FIG. 10 illustrates another format that the first embodiment may take. While the error-correction coded block is divided into two sections in the example of selective parity mode illustrated in FIG. 9, the present embodiment also allows the use of other puncturing methods.

Referring now to an example of FIG. 10, the base station 100 can reach a mobile station 300 through three paths (i.e., one direct path and two relay paths). As can be seen from this example, the selective parity mode allows the extracted bit strings to partly overlap with each other in their systematic bits or parity bits or both. In such cases, the mobile station 300 combines received bit strings by selectively overlaying their overlapping portions. The selective parity mode according to the present embodiment also allows the bit strings carried through a plurality of paths to lack a portion of the original data block. In this case, the mobile station 300 may complement the block by stuffing that portion with dummy bits. For selective parity mode, the system may define previously which portion of a data block to extract. It may also be possible to select a portion according to observed communication quality.

The first embodiment provides a radio communication system in which a mobile station 300 can combine receive data of SD link with that of RD link before decoding them. The SD and RD links may differ in their communication quality. The base station 100 selects an appropriate relaying mode (e.g., simple repetition mode or selective parity mode) depending on the difference of communication quality. These features of the present embodiment permit the mobile station 300 to enjoy an increased gain brought about by the use of a relay station 200, reduce the block error rates, and achieve a higher throughput.

While the above description has assumed that the base station 100 is responsible for selection of relaying mode and modulation and coding scheme, the first embodiment is not limited to that configuration. For example, the embodiment may allow the relay station 200 to collect information about communication quality of each link and make a selection of relaying mode or modulation and coding scheme or both.

Second Embodiment

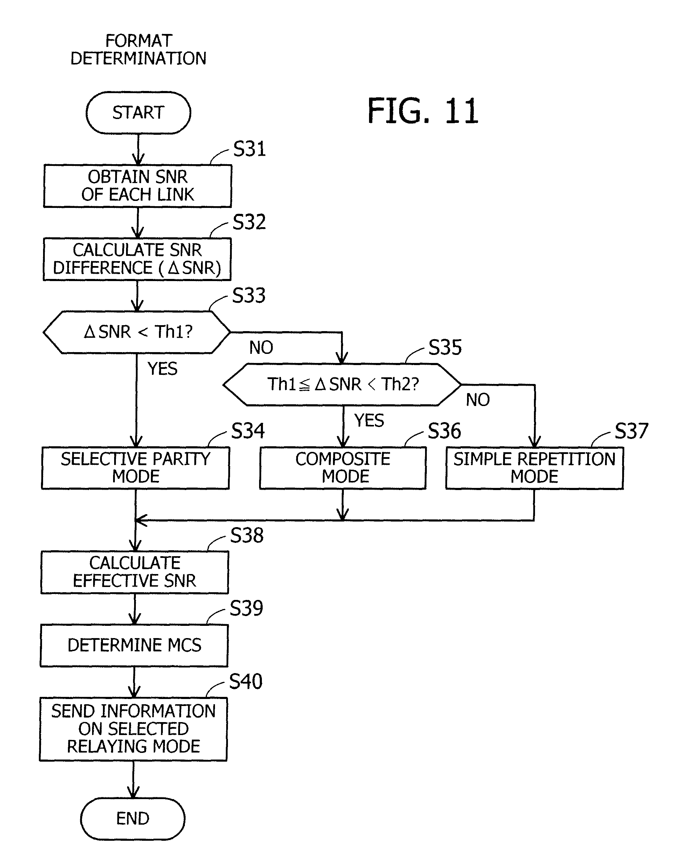

A second embodiment of the present invention will now be described below in detail with reference to FIG. 11 and subsequent drawings. Since the second embodiment shares some elements with the foregoing first embodiment, the following discussion will focus on their distinctive points, omitting explanations of similar elements.

The second embodiment provides a radio communication system that defines three relaying modes and selects an appropriate mode from among those three options. Specifically, the second embodiment allows a base station and a relay station to extract the same section of a data block, referring to it as "simple repetition mode." The second embodiment also allows them to extract different but partly overlapping sections of a data block, referring to it as "composite mode." The second embodiment further allows them to extract non-overlapping sections of a data block, referring to it as "selective parity mode."

The radio communication system of the second embodiment can be implemented with a system configuration similar to the one that has been illustrated and discussed in FIG. 2 for the first embodiment. The base station, relay station and mobile station according to the second embodiment can also be implemented with a block structure similar to the ones that have been illustrated and discussed in FIGS. 3 to 5 for the first embodiment, except that the base station controls selection of relaying modes in a different way. Where appropriate, the following description of the second embodiment will use the same reference numerals as those used in FIGS. 2 to 5.

FIG. 11 is a flowchart of a format determination process according to a second embodiment. This process is executed repetitively in the base station 100, which includes the following steps:

(Step S31) The controller 160 obtains feedback data indicating SNR of each link (i.e., SD link and RD link) which has been measured at the mobile station 300.

(Step S32) The controller 160 calculates a difference of SNR between the RD link and SD link. More specifically, the controller 160 calculates $(\gamma_1-\gamma_0)$ as an SNR difference ($\Delta$SNR), where $\gamma_0$ represents SNR of SD link and $\gamma_1$ represents SNR of RD link.

(Step S33) The controller 160 determines whether the SNR difference calculated at step S32 is smaller than a predetermined threshold Th1. For this Th1, the controller 160 may use the same threshold value as used in the first embodiment, or may use a different threshold value. If the SNR difference is smaller than Th1, the process advances to step S34. If not, the process proceeds to step S35.

(Step S34) The controller 160 chooses selective parity mode as the relaying mode. That is, the controller 160 decides to command the relay station 200 to extract a bit string from a data block without making it overlap with that extracted by the base station 100. The process then proceeds to step S38.

(Step S35) The controller 160 determines whether the SNR difference calculated at step S32 is smaller than a predetermined threshold Th2, where Th1<Th2. Note that the controller 160 already knows that the SNR difference is equal to or greater than Th1 because of the result of step S33. If the SNR difference is smaller than Th2, the process advances to step S36. If not, the process proceeds to step S37.

(Step S36) The controller 160 chooses composite mode as the relaying mode. That is, the controller 160 decides to command the relay station 200 to extract a bit string which partly overlaps with that extracted from a data block by the base station 100. The process then proceeds to step S38.

(Step S37) The controller 160 chooses simple repetition mode as the relaying mode. That is, the controller 160 decides to command the relay station 200 to extract a bit string from the same section of a data block as the base station 100 does. The process then proceeds to step S38.

(Step S38) The controller 160 calculates an effective SNR from given SNR values of SD and RD links by using a formula corresponding to the relaying mode selected at steps S34 to S37. For example, the controller 160 uses the foregoing formula (2) for simple repetition mode, and (3) for selective parity mode. In the case of composite mode, the controller 160 may use formula (3) similarly to selective parity mode. Or the controller 160 may use some other formula prepared beforehand for composite mode.

(Step S39) The controller 160 determines an appropriate modulation and coding scheme depending on the effective SNR calculated at step S38.

(Step S40) The controller 160 produces control parameters indicating the relaying mode that has been determined at step S34, S36, or S37. The produced control parameters are transmitted to the relay station 200 via the modulator 140.

With the above steps, the base station 100 first receives information describing communication quality of SD and RD links from the mobile station 300. Then according to the difference of communication quality between those two links, the base station 100 selects simple repetition mode, composite mode, or selective parity mode and notifies the relay station 200 of the selection. The relay station 200 punctures transmit data according to the relaying mode specified by the base station 100.

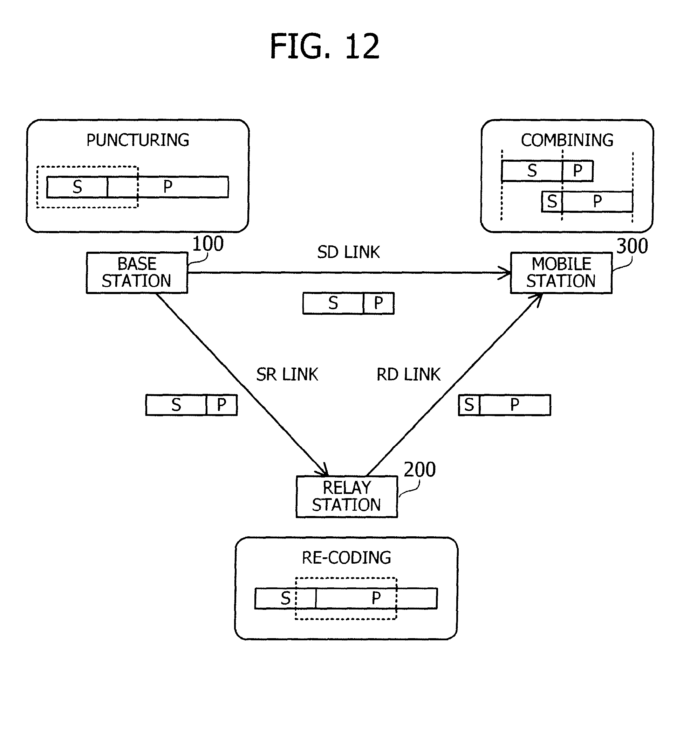

FIG. 12 illustrates data transmission according to the second embodiment, particularly in the case where the base station 100 has selected composite mode as the relaying mode. It is assumed here that each error-correction coded data block contains systematic bits and parity bits at the ratio of 1:2, and that the capacity of a single data transmission is equivalent to one half of the data block length.

With its puncturing function, the base station 100 extracts all systematic bits and a portion of parity bits from a given data block and sends the extracted bit string by using a radio resource of SD link. Upon receipt of this bit string from the base station 100, the relay station 200 subjects it to decoding and re-coding processes. During the course, the relay station 200 extracts a bit string which partly overlaps with what the base station 100 has extracted from the original data block. For example, the relay station 200 extracts a bit string including a portion of systematic bits and a portion of parity bits. The relay station 200 transmits the extracted bit string by using a radio resource of RD link.

The mobile station 300 combines two bit strings received from the base station 100 and relay station 200 into a single bit string by, for example, overlaying one on another for their overlapping portion, as well as concatenating one to another for their non-overlapping portion. The mobile station 300 then decodes the combined bit string. By combining two receive signals in this way, the mobile station 300 obtains the benefits of both diversity gain and coding gain, thus reducing the block error rates. For composite mode, the system may previously define which portion of a data block to extract. It may also be possible to select a portion according to observed communication quality.

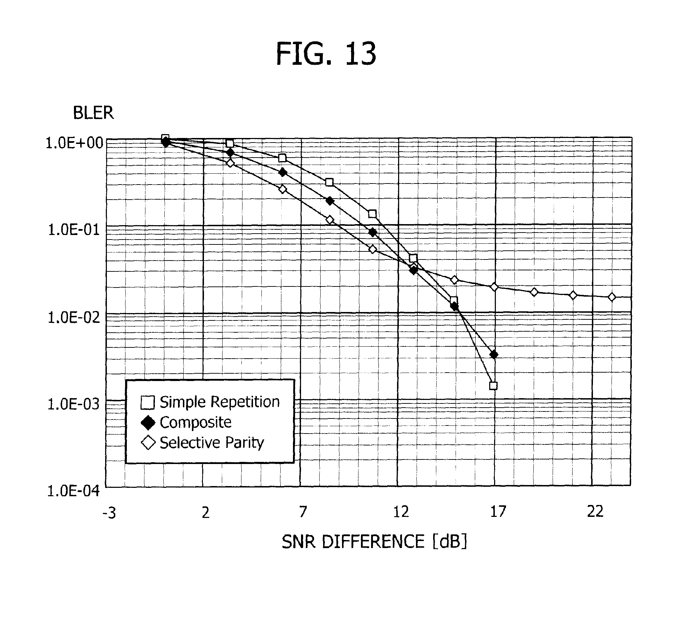

One advantage of employing composite mode in addition to simple repetition mode and selective parity mode is as follows. FIG. 13 is a first graph representing a relationship between relaying modes and block error rates. Specifically, the graph of FIG. 13 plots a curve of block error rate (BLER) versus SNR difference for each of the simple repetition mode, composite mode, and selective parity mode. The horizontal axis represents SNR difference (dB), and vertical axis represents block error rate (dimensionless). This graph depicts the results of a simulation performed under the following conditions:

    Data block length: 3072 bytes
    Modulation method: QPSK
    Code rate of SD link: 0.8
    Code rate of RD link: 0.48

The code rate is a ratio of systematic bits contained in a bit string transmitted through a specific link.

As can be seen from the graph of FIG. 13, the block error rate in simple repetition mode drops as the SNR of RD link increases. The bit strings transmitted in simple repetition mode are combined at the receiving end by, for example, adding received signal levels. The resulting data block is relatively uniform in terms of the quality of bits constituting the block. This is why the corresponding curve of FIG. 13 exhibits a monotonous decrease of block error rate.

The block error rate of selective parity mode also drops as the SNR of RD link increases, but the drop is not as sharp as the simple repetition mode's in the range with large SNR differences. The bit strings transmitted in selective parity mode are combined at the receiving end by concatenating one to another. The resulting data block may contain some data bits whose quality is distinctly different from others'. This explains the slower drop of block error rate.

Particularly, in the case where the coding system for error correction prioritizes systematic bits over parity bits, the systematic bits may be assigned primarily to SD link, and the parity bits to RD link. In such a case, a significantly high SNR of RD link with respect to the SNR of SD link would make it difficult to achieve a sufficient coding gain. Like other schemes, the composite mode also exhibits a drop of block error rate with an increase of SNR of RD link. The rate of the drop depends also on the code rate of RD link.

The illustrated simulation result of FIG. 13 indicates that the selective parity mode can reduce the block error rate most effectively than other schemes when the SNR difference is 12 dB or smaller. When the SNR difference is in the range from 13 dB to 15 dB, the composite mode outperforms the others. When the SNR difference is 16 dB or greater, the simple repetition mode is most effective in terms of the degree of block error rate reduction. Accordingly, the base station 100 selects an appropriate relaying mode that offers a largest reduction of block error rate, depending on the calculated difference of SNR between SD link and RD link. The simulation results depicted in FIG. 13 may thus be used to determine the foregoing thresholds Th1 and Th2.

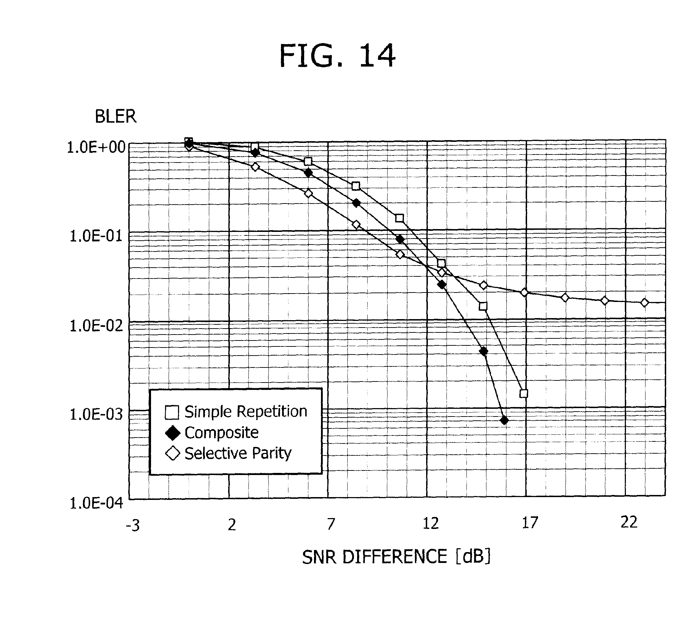

FIG. 14 is a second graph representing a relationship between relaying modes and block error rates. Similar to the foregoing graph of FIG. 13, FIG. 14 plots a curve of block error rate (BLER) versus SNR difference for each of the simple repetition mode, composite mode, and selective parity mode. This graph offers another example of simulation results under the following conditions:

    Data block length: 3072 bytes
    Modulation method: QPSK
    Code rate of SD link: 0.8
    Code rate of RD link: 0.3

Note that the code rate of RD link is changed. This difference from the case of FIG. 13 appears in the graph of FIG. 14 as a different curve for composite mode.

The illustrated simulation result of FIG. 14 indicates that the selective parity mode can reduce the block error rate most effectively than other schemes when the SNR difference is 12 dB or smaller. When the SNR difference is 13 dB or greater, the composite mode outperforms the others. This advantage of composite mode over simple repetition mode will not be reversed even in the range with large SNR differences. Accordingly, the base station 100 may be configured to select either selective parity mode or composite mode as an optimal relaying mode.

In composite mode, the bit string of SD link overlaps with that of RD link at a certain ratio. The base station 100 may use a fixed overlap ratio for this purpose, or may vary the ratio adaptively to the observed communication quality. In the latter case, the base station 100 may use adaptive thresholds Th1 and Th2 to determine an appropriate relaying mode, where the values of Th1 and Th2 are selected in accordance with the overlap ratio of bit strings and the code rate of RD link.

The SD and RD links may differ in their communication quality. According to the second embodiment, the proposed radio communication system selects an appropriate relaying mode from among the options of simple repetition mode, composite mode, and selective parity mode, depending on the difference of communication quality between SD and RD links. Particularly the second embodiment considers the gain that is obtained in the case of using both SD link and RD link to carry a portion of bits redundantly. These features of the second embodiment permit the mobile station 300 to enjoy an increased gain brought about by the use of a relay station 200, reduce block error rates, and achieve a higher throughput.

Third Embodiment

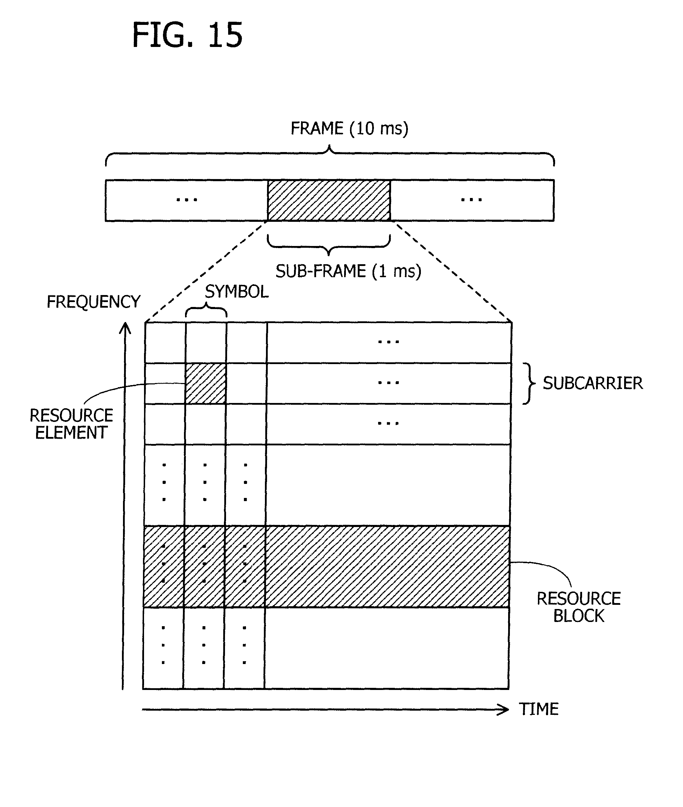

A third embodiment of the present invention will now be described below in detail with reference to FIG. 15 and subsequent drawings. Since the third embodiment shares some elements with the foregoing first embodiment, the following discussion will focus on their distinctive points, omitting explanations of similar elements.

The third embodiment provides a radio communication system that uses the orthogonal frequency-division multiplexing (OFDM) techniques to transmit data. The base station thus allocates radio resources to mobile stations on a resource block basis.

The radio communication system of the third embodiment can be implemented with a system configuration similar to the one that has been illustrated and discussed in FIG. 2 for the first embodiment. The base station, relay station and mobile station according to the second embodiment can also be implemented with a block structure similar to the ones that have been illustrated and discussed in FIGS. 3 to 5 for the first embodiment, except that the base station controls selection of relaying modes in a different way. Where appropriate, the following description of the third embodiment will use the same reference numerals as those used in FIGS. 2 to 5.

FIG. 15 illustrates an example of an OFDM frame structure according to the third embodiment. The illustrated OFDM frames are transmitted through SD and RD links. One frame is 10 ms in length, constituted by a plurality of 1-ms sub-frames. To convey those sub-frames, the radio resources are managed in smaller fragments in both frequency and time domains. The minimum units in the frequency domain are called "subcarriers," while those in the time domain are called "symbols." The minimum units of radio resource, called "resource elements," are each constituted by one subcarrier and one symbol.

For example, the mobile station 300 may be allocated a plurality of subcarriers in a subframe. Such a chunk of radio resources are referred to as a resource block. The mobile station 300 is allocated a different resource block for each SD link and RD link. The SD and RD links may share the same frequency bands or may use different frequency bands. SD link frames may be or may not be synchronized with RD link frames.

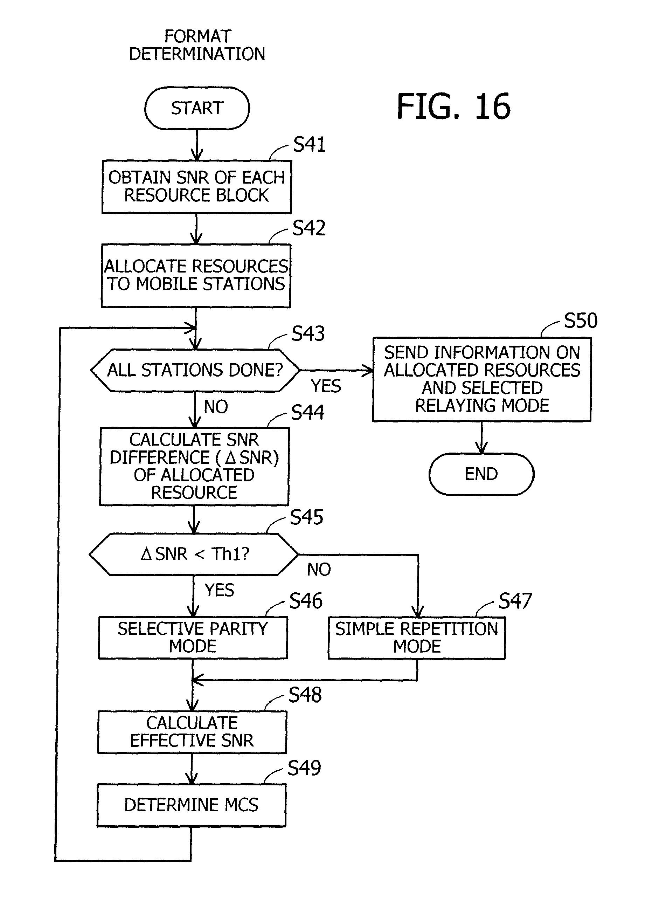

FIG. 16 is a flowchart of a format determination process according to the third embodiment. This process is executed repetitively in the base station 100, which includes the following steps:

(Step S41) The controller 160 obtains feedback data indicating SNR of each resource block which has been measured at the mobile station 300. When there are two or more mobile stations, the controller 160 collects feedback data from other such mobile stations as well. The mobile station 300 may report SNR only for a limited number of resource blocks if it is possible to narrow down the range of resource blocks that may be assigned to itself.

(Step S42) Based on the SNR of each resource block which has been obtained at step S41, the controller 160 allocates resource blocks to the mobile station 300 for use as SD and RD links. When there are two or more mobile stations, the controller 160 similarly allocates resource blocks to other mobile stations, optionally taking into account the fairness among mobile stations.

(Step S43) The controller 160 determines whether all mobile stations attached to the base station 100 have undergone steps S44 to S49 described below. If so, the process advances to step S50. If there are remaining mobile stations, the process proceeds to step S44. The following explanation of steps S44 to S49 assumes that the mobile station 300 is being selected.

(Step S44) The controller 160 calculates a difference between SD link and RD link in terms of SNR of their resource blocks allocated to the mobile station 300. More specifically, the controller 160 calculates ($\gamma_1$-$\gamma_0$) as an SNR difference ($\Delta$SNR), where $\gamma_0$ represents SNR of SD link's resource block and $\gamma_1$ represents SNR of RD link's resource block.

(Step S45) The controller 160 determines whether the SNR difference calculated at step S44 is smaller than a predetermined threshold Th1. If so, the process advances to step S46. If not, the process proceeds to step S47.

(Step S46) The controller 160 selects selective parity mode as the relaying mode applicable to data addressed to the mobile station 300. The process then proceeds to step S48.

(Step S47) The controller 160 selects simple repetition mode as the relaying mode applicable to data addressed to the mobile station 300. The process then proceeds to step S48.

(Step S48) Using a formula corresponding to the relaying mode selected at step S46 or S47, the controller 160 calculates an effective SNR from given SNR values of SD link's resource block and RD link's resource block. For example, the foregoing formulas (2) and (3) may be used in this calculation.

(Step S49) The controller 160 determines an appropriate modulation and coding scheme depending on the effective SNR calculated at step S48. The process then returns to step S43.

(Step S50) The controller 160 produces a control parameter indicating the resource block allocated to RD link at step S42. The controller 160 also produces another control parameter indicating the relaying mode selected at step S46 or S47. The produced control parameters are transmitted to the relay station 200 via the modulator 140.

With the above steps, the base station 100 first receives information describing communication quality of each resource block from the mobile station 300. The base station 100 then allocates resource blocks for SD and RD links and selects either simple repetition mode or selective parity mode, depending on the difference between the allocated resource blocks in terms of their communication quality. The base station 100 informs the relay station 200 of the allocated resource blocks and the selected relaying mode. The relay station 200 punctures transmit data according to the relaying mode specified by the base station 100 and transmits the resulting bit string by using the resource block specified by the base station 100.

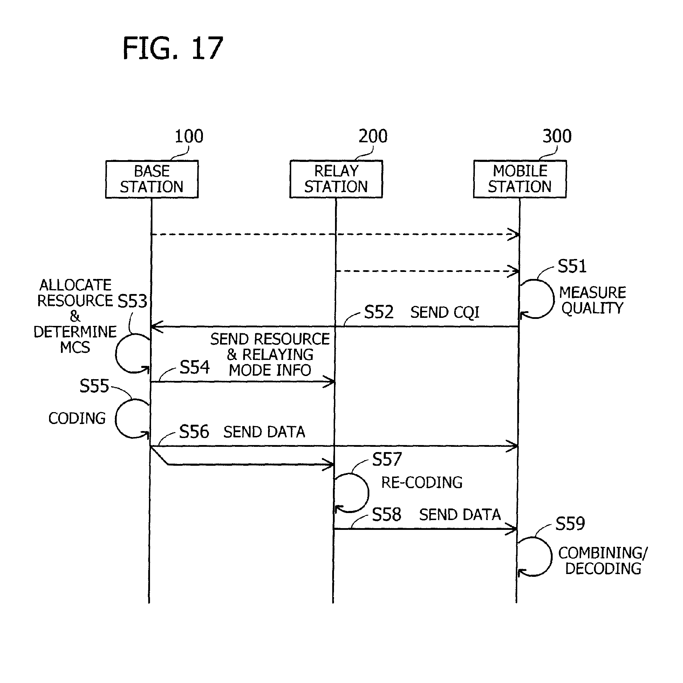

FIG. 17 is a sequence diagram illustrating a flow of messages according to the third embodiment. The process illustrated in FIG. 17 includes the following steps:

(Step S51) The mobile station 300 measures SNR of each resource block by observing incoming signals from the base station 100 and relay station 200. The measurement of different resource blocks may be performed all at once or at different time instants.

(Step S52) For each resource block, the mobile station 300 sends feedback data to the base station 100. The feedback data contains CQI values representing the measured SNRs of resource blocks. Those CQIs may be delivered together at a time, or may be transmitted separately at different time instants.

(Step S53) Based on the feedback data received at step S52, the base station 100 allocates resource blocks to the mobile station 300. Further, based on the CQIs of the allocated resource blocks, the base station 100 determines an appropriate modulation and coding scheme, besides selecting an appropriate relaying mode (e.g., simple repetition mode or selective parity mode).

(Step S54) The base station 100 informs the relay station 200 of the allocation of resource blocks and the relaying mode selection, which have been made at step S53. Those pieces of information may be transmitted together at a time, or may be transmitted separately at different time instants.

(Step S55) According to the modulation and coding scheme determined at step S53, the base station 100 subjects a given data block to error correction coding, rate matching, and modulation processes, thereby producing a transmit signal.

(Step S56) By using a resource block of SD link, the base station 100 outputs the transmit signal produced at step S55, thus transmitting it via radio waves.

(Step S57) Upon receipt of the signal transmitted from the base station 100 at step S56, the relay station 200 subjects the signal to demodulation, de-rate matching, and decoding processes, so as to reproduce the original data block. The relay station 200 then applies another series of error correction coding, rate matching, and modulation processes to that data block, thereby producing a transmit signal. During this course, the relay station 200 punctures the data block according to the relaying mode specified at step S54.

(Step S58) By using a resource block of RD link, the relay station 200 outputs the transmit signal produced at step S57, thus transmitting it to the mobile station 300 via radio waves.

(Step S59) The mobile station 300 demodulates a signal received from the base station 100 at step S56, as well as a signal received from the relay station 200 at step S58. The mobile station 300 combines the two demodulated bit strings into a single reproduced bit string.

As can be seen from the above sequence, the mobile station 300 measures SNR of each resource block and informs the base station 100 of CQIs representing the measured SNRs. Based on the CQI values received from the mobile station 300, the base station 100 allocates resource blocks to the mobile station 300, selects an appropriate relaying mode, and notifies the relay station 200 of the selection. The base station 100 also determines a modulation and coding scheme from the CQIs and transmits data by using a resource block of SD link. The relay station 200 forwards the data according to the relaying mode specified by the base station 100. The mobile station 300 combines data received from the base station 100 and relay station 200.

In the radio communication system according to the third embodiment, the base station 100 is configured to allocate resource blocks of SD and RD links to a mobile station 300, taking into consideration the communication quality of each resource block. Since the SD and RD links may differ in their communication quality, the base station 100 selects an appropriate relaying mode corresponding to such quality differences. As a result, the mobile station 300 can receive signals with an increased gain, reduce block error rates, and achieve a higher throughput.

While the above description of the third embodiment has assumed that the base station 100 is responsible for allocating resource blocks for SD and RD links, the third embodiment is not limited to that configuration. Alternatively, the relay station 200 may take care of such resource blocks. In this case, the relay station 200 informs the base station 100 of which resource blocks it has allocated, so that the base station 100 can use that information to select an appropriate relaying mode.

The mobile station 300 may be configured to report the communication quality of RD link's resource block to the relay station 200, so that the information will be delivered to the base station 100 via the relay station 200.

The third embodiment may incorporate the features of the foregoing second embodiment. That is, the third embodiment may be configured to offer three options (e.g., simple repetition mode, composite mode and selective parity mode) for its relaying mode selection, as in the second embodiment.

Fourth Embodiment

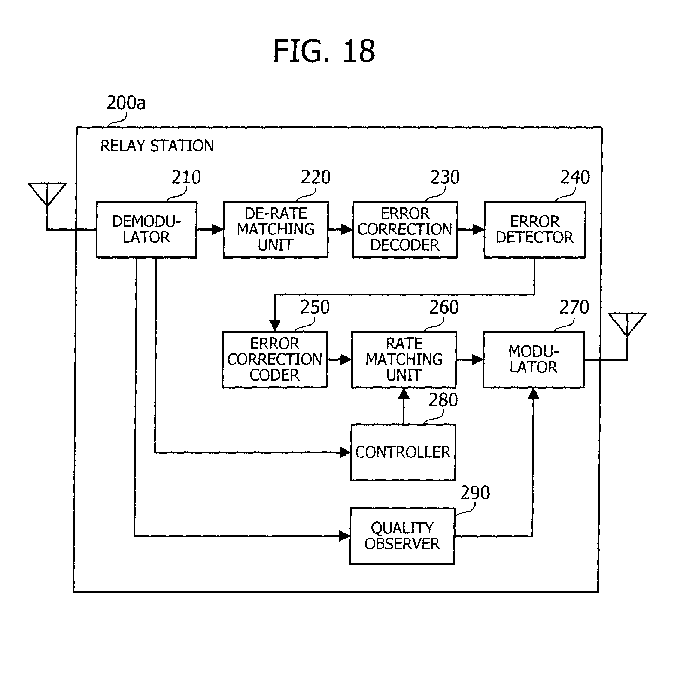

A fourth embodiment of the present invention will now be described below in detail with reference to FIG. 18 and subsequent drawings. Since the fourth embodiment shares some elements with the foregoing third embodiment, the following discussion will focus on their distinctive points, omitting explanations of similar elements. According to this fourth embodiment, the radio communication system controls allocation of radio resources, taking into account the communication quality of a link from base station to relay station. This link is referred to as the source-to-relay link, or SR link.

The radio communication system of the fourth embodiment can be implemented with a system configuration similar to the one that has been illustrated and discussed in FIG. 2 for the first embodiment. The base station, relay station and mobile station according to the fourth embodiment can also be implemented with a block structure similar to the ones that have been illustrated and discussed in FIGS. 3 to 5 for the first embodiment, except that the base station manages radio resources in a different way. Where appropriate, the following description of the fourth embodiment will use the same reference numerals as those used in FIGS. 3 and 5 for the elements of the base station and mobile station.

FIG. 18 is a block diagram illustrating a relay station according to the fourth embodiment. The illustrated relay station 200a includes the following elements: a demodulator 210, a de-rate matching unit 220, an error correction decoder 230, an error detector 240, an error correction coder 250, a rate matching unit 260, a modulator 270, a controller 280, and a quality observer 290. The demodulator 210, de-rate matching unit 220, error correction decoder 230, error detector 240, error correction coder 250, rate matching unit 260, modulator 270 and controller 280 provide the same functions as their respective counterparts in the foregoing first and third embodiments.

Transmit signals arriving from the base station 100 contain some known signals. The quality observer 290 examines such known signals supplied from the demodulator 210 to measure the communication quality of SR link. The quality observer 290 produces feedback data indicating the measurement result and supplies it to the modulator 270. Here the quality observer 290 may use SNR or SINR as a metric of communication quality, as well as CQI as feedback data. The feedback data is then transmitted to the base station 100 via the modulator 270.

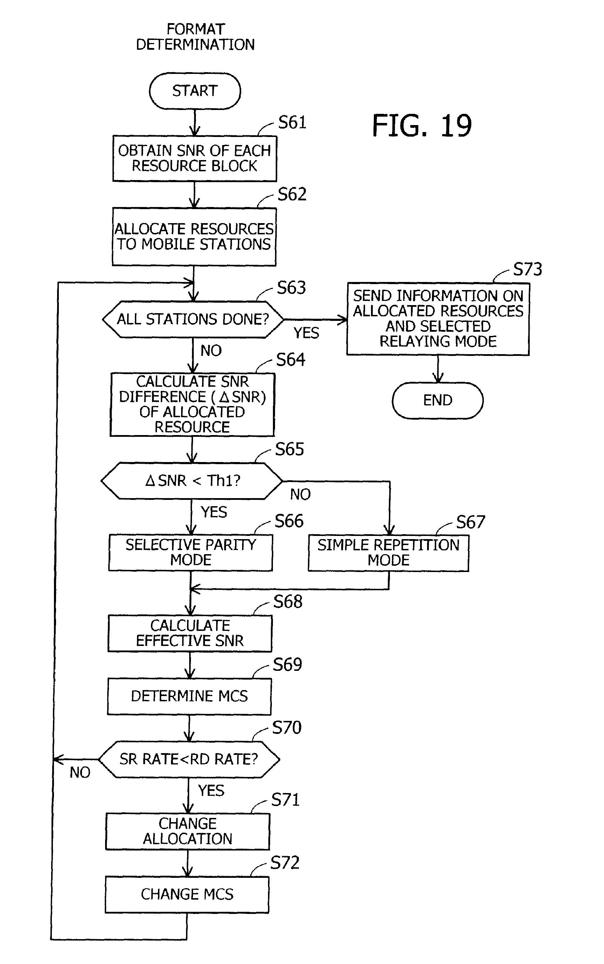

FIG. 19 is a flowchart of a format determination process according to the fourth embodiment. This process is executed repetitively in the base station 100. The process illustrated in FIG. 19 includes the following steps:

(Step S61) The controller 160 obtains feedback data indicating SNR of each resource block which has been measured at the mobile station 300. The controller 160 also obtains feedback data indicating SNR of each resource block of SR link which has been measured at the relay station 200a. When there are more mobile stations, the controller 160 collects feedback data from other mobile stations.

(Step S62) Based on the SNR of each resource block which has been obtained at step S61, the controller 160 allocates resource blocks to the mobile station 300 for use as SD and RD links. When there are more mobile stations, the controller 160 allocates resource blocks to other mobile stations.

(Step S63) The controller 160 determines whether all mobile stations attached to the base station 100 have undergone steps S64 to S72 described below. If so, the process advances to step S73. If there are remaining mobile stations, the process proceeds to step S64. The following explanation of steps S64 to S72 assumes that the mobile station 300 is being selected.

(Step S64) The controller 160 calculates a difference (ΔSNR) between SD link and RD link in terms of SNR of their resource blocks allocated to the mobile station 300.

(Step S65) The controller 160 determines whether the SNR difference calculated at step S64 is smaller than a predetermined threshold Th1. If so, the process advances to step S66. If not, the process proceeds to step S67.

(Step S66) The controller 160 selects selective parity mode as the relaying mode applicable to data addressed to the mobile station 300. The process then proceeds to step S68.

(Step S67) The controller 160 selects simple repetition mode as the relaying mode applicable to data addressed to the mobile station 300. The process then proceeds to step S68.

(Step S68) Using a formula corresponding to the relaying mode selected at step S66 or S67, the controller 160 calculates an effective SNR from given SNR values of SD link's resource block and RD link's resource block.

(Step S69) The controller 160 determines an appropriate modulation and coding scheme depending on the effective SNR calculated at step S68.

(Step S70) Based on the SNR obtained at step S61 and the modulation and coding scheme determined at step S69, the controller 160 estimates transmission rates that the SR link and RD link can achieve individually. The controller 160 then determines whether the transmission rate of SR link is smaller than that of RD link. If so, the process advances to step S71. If not, the process returns to step S63.

(Step S71) The controller 160 reduces the amount of resources allocated to RD link. For example, in the case where a plurality of resource blocks have been allocated to the mobile station 300 at step S62, the controller 160 reduces the number of such resource blocks. The controller 160 determines how many resource blocks to reduce, based on, for example, the difference between the transmission rate of SR link and that of RD link, which have been estimated at step S70.

(Step S72) Now that the allocation of resource blocks has been changed at step S71, the controller 160 evaluates their SNRs again to re-determine which modulation and coding scheme to use. The process then goes back to step S63.

(Step S73) The controller 160 produces control parameters indicating the resource blocks allocated to RD link at step S62. The controller 160 also produces another control parameter indicating the relaying mode selected at step S66 or S67. The produced control parameters are transmitted to the relay station 200a via the modulator 140.

Through the above steps, the base station 100 modifies the amount of radio resources allocated to RD link when the transmission rate of SR link is smaller than that of RD link. This feature of the base station 100 prevents radio resources of RD link from being wasted because of poor communication quality of SR link.

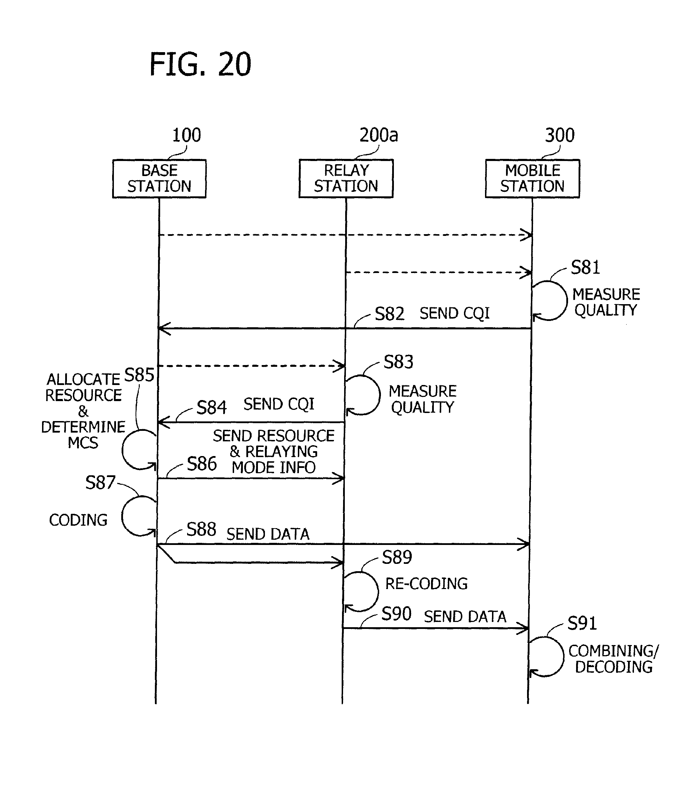

FIG. 20 is a sequence diagram illustrating a flow of messages according to the fourth embodiment. The process illustrated in FIG. 20 includes the following steps:

(Step S81) The mobile station 300 measures SNR of each resource block by observing incoming signals from the base station 100 and relay station 200a.

(Step S82) The mobile station 300 sends feedback data to the base station 100 to deliver CQI values representing the SNRs measured at step S81.

(Step S83) The relay station 200a measures SNR of each resource block by observing incoming signals from the base station 100.

(Step S84) The relay station 200a sends feedback data to the base station 100 to deliver CQI values representing the SNRs measured at step S83. Steps S83 and S84 may not necessarily be preceded by steps S81 and S82. The relay station 200a may execute those steps S83 and S84 independently of the processing of step S81 and S82 at the mobile station 300.

(Step S85) Based on the feedback data received at step S82, the base station 100 allocates resource blocks to the mobile station 300. Then, based on CQIs of the allocated resource blocks, the base station 100 determines an appropriate modulation and coding scheme and selects an appropriate relaying mode. Further, based on the feedback data received at step S84, the controller 160 adjusts the amount of resource blocks allocated to RD link.

(Step S86) The base station 100 informs the relay station 200a of the resource blocks allocated at step S85, as well as of the selected relaying mode.

(Step S87) According to the modulation and coding scheme determined at step S85, the base station 100 subjects a given data block to error correction coding, rate matching, and modulation processes, thereby producing a transmit signal.

(Step S88) By using a resource block of SD link, the base station 100 outputs the transmit signal produced at step S87, thus transmitting it via radio waves.

(Step S89) Upon receipt of the signal transmitted from the base station 100 at step S88, the relay station 200a subjects the signal to demodulation, de-rate matching, and decoding processes, so as to reproduce the original data block. The relay station 200 then applies another series of error correction coding, rate matching, and modulation processes to that data block, thereby producing a transmit signal. During this course, the relay station 200a punctures the data block according to the relaying mode specified at step S86.

(Step S90) By using a resource block of RD link specified at step S86, the relay station 200a outputs the transmit signal produced at step S89, thus transmitting it to the mobile station 300 via radio waves.

(Step S91) The mobile station 300 demodulates a signal received from the base station 100 at step S88, as well as a signal received from the relay station 200a at step S90. The mobile station 300 combines the resulting bit strings into a single reproduced bit string.

As can be seen from the above sequence, the mobile station 300 informs the base station 100 of CQIs of SD and RD links, while the relay station 200a informs the base station 100 of CQI of SR link. Based on the CQI information received from the mobile station 300, the base station 100 allocates resource blocks, selects an appropriate relaying mode, and determines an appropriate modulation and coding scheme. Based further on the CQI information received from the relay station 200a, the base station 100 adjusts the allocation of resource blocks. The relay station 200a forwards data according to the relaying mode specified by the base station 100. The mobile station 300 combines data received from the base station 100 and relay station 200.

In the radio communication system according to the fourth embodiment, the base station 100 is configured to reduce the amount of resources allocated to RD link when SR link has a relatively low communication quality, whereas RD link has a relatively high communication quality. The removed radio resources may be allocated to other mobile stations. This feature of the base station 100 prevents radio resources of RD link from being wasted due to the bottle-neck at SR link, thus making it possible to use radio resources more efficiently.

While the above description of the fourth embodiment has assumed that the base station 100 is responsible for allocation of RD-link resource blocks, the fourth embodiment is not limited to that configuration. Alternatively, the relay station 200 may take care of such resource blocks. The fourth embodiment may be configured to offer three options (e.g., simple repetition mode, composite mode and selective parity mode) for its relaying mode selection, as in the second embodiment. The fourth embodiment may be applied not only to OFDM systems, but also to other types of radio communication systems.

Fifth Embodiment

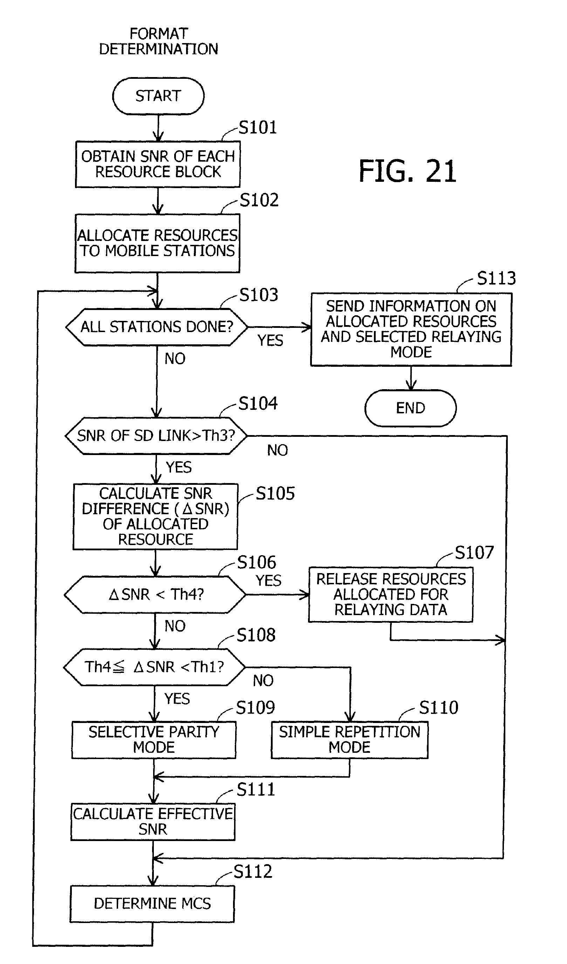

A fifth embodiment of the present invention will now be described below in detail with reference to FIG. 21 and subsequent drawings. Since the fifth embodiment shares some elements with the foregoing third embodiment, the following discussion will focus on their distinctive points, omitting explanations of similar elements. The radio communication system of the fifth embodiment is designed to stop its cooperative diversity function, depending on the communication quality of SD and RD links.

The radio communication system of the fifth embodiment can be implemented with a system configuration similar to the one that has been illustrated and discussed in FIG. 2 for the first embodiment. The base station, relay station and mobile station according to the fifth embodiment can also be implemented with a block structure similar to the ones that have been illustrated and discussed in FIGS. 3 to 5 for the first embodiment, except that the base station controls relay stations in a different way. Where appropriate, the following description of the fifth embodiment will use the same reference numerals as those used in FIGS. 2 to 5.

FIG. 21 is a flowchart of a format determination process according to the fifth embodiment. This process is executed repetitively in the base station 100, which includes the following steps:

(Step S101) The controller 160 obtains feedback data indicating SNR of each resource block which has been measured at the mobile station 300. When there are more mobile stations, the controller 160 similarly collects feedback data from other mobile stations.

(Step S102) Based on the SNR of each resource block which has been obtained at step S101, the controller 160 allocates resource blocks to the mobile station 300 for use as SD and RD links. When there are more mobile stations, the controller 160 similarly allocates resource blocks to other mobile stations.

(Step S103) The controller 160 determines whether all mobile stations attached to the base station 100 have undergone steps S104 to S112 described below. If so, the process advances to step S113. If there are remaining mobile stations, the process proceeds to step S104. The following explanation of steps S104 to S112 assumes that the mobile station 300 is being selected.

(Step S104) The controller 160 determines whether the SNR of a resource block assigned to SD link is greater than a predetermined threshold Th3. In the case where a plurality of resource blocks are available for SD link, the controller 160 makes this determination with the average, minimum, or maximum of their SNR values. If the SNR in question is greater than Th3, the process advances to step S105. If the SNR is equal to or smaller than Th3, the controller 160 decides to stop cooperative diversity using the SD link, thus moving the process to step S112.

(Step S105) The controller 160 calculates a difference ($\Delta$SNR) between SD link and RD link in terms of SNR of their resource blocks allocated to the mobile station 300.

(Step S106) The controller 160 determines whether the SNR difference calculated at step S105 is smaller than another predetermined threshold Th4, where Th4<0. In other words, it is determined whether SD link has a sufficiently high SNR, relative to the SNR of RD link. If the SNR difference is smaller than Th4, the process advances to S107. If not, the process proceeds to step S108.

(Step S107) The controller 160 decides to stop the cooperative diversity using RD link, thus releasing the resource blocks that have been allocated to the mobile station 300 for use as RD link. The process then proceeds to step S112.

(Step S108) Now that the SNR difference calculated at step S105 is found to be equal to or greater than Th4, the controller 160 then determines whether the SNR difference is smaller than yet another predetermined threshold Th1. If the SNR difference is smaller that Th1, the process advances to step S109. If not, the process proceeds to step S110.

(Step S109) The controller 160 selects selective parity mode as the relaying mode applicable to data addressed to the mobile station 300. The process then proceeds to step S111.

(Step S110) The controller 160 selects simple repetition mode as the relaying mode applicable to data addressed to the mobile station 300. The process then proceeds to step S111.

(Step S111) Using a formula corresponding to the relaying mode selected at step S109 or S110, the controller 160 calculates an effective SNR from given SNR values of SD link's resource block and RD link's resource block.

(Step S112) In the case of performing cooperative diversity, the controller 160 determines an appropriate modulation and coding scheme according to the effective SNR calculated at step S111. In the case of canceling cooperative diversity, the controller 160 determines an appropriate modulation and coding scheme according to the SNR of SD link or RD link. The process then returns to step S103.

(Step S113) The controller 160 produces control parameters indicating the resource blocks allocated to RD link at step S102. Those resource blocks, however, may have been released at step S107. If that is the case, the controller 160 produces control parameters indicating the releasing of RD-link resources. The controller 160 further produces a control parameter indicating the relaying mode selected at step S109 or S110. Those control parameters are transmitted to the relay station 200 via the modulator 140.

Through the above steps, the base station 100 stops relaying data with RD link when the RD link has a relatively low communication quality whereas RD link has a relatively high communication quality. When, on the other hand, the SD link quality is low, the base station 100 controls the mobile station 300 such that it will use bit strings, not of the SD link, but of the RD link alone.

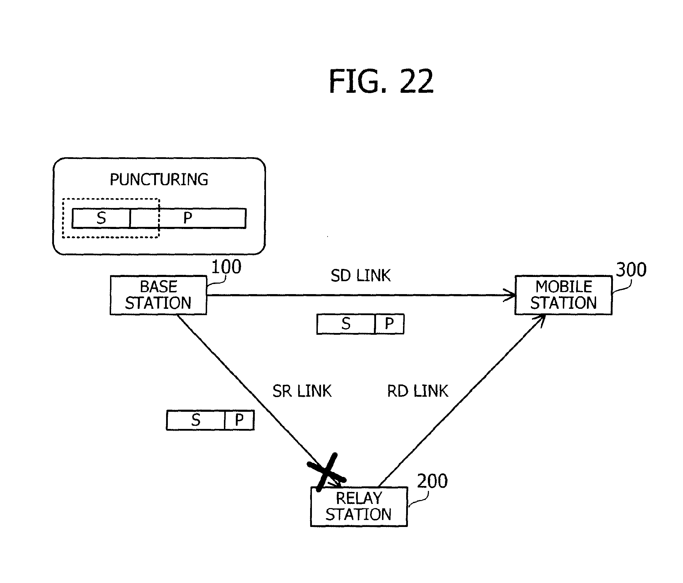

FIG. 22 illustrates data transmission according to the fifth embodiment in the case where the relaying operation is stopped. It is assumed here that each error-correction coded data block contains systematic bits and parity bits at the ratio of 1:2, and that the capacity of a single data transmission is equivalent to one half of the data block length.

The base station 100 extracts all systematic bits and a portion of parity bits from a given data block and sends the extracted bit string by using a radio resource of SD link. While the transmitted bit string may also reach the relay station 200, the relay station 200 does not decode or re-code the received bit string, let alone retransmit it to RD link.

The mobile station 300 decodes such bit strings received from the base station 100. As the SD link provides a good communication quality, it is unlikely for the mobile station 300 to experience high block error rates. The base station 100 may be configured to send control parameters, for example, to instruct the mobile station 300 not to expect signals from the relay station 200.

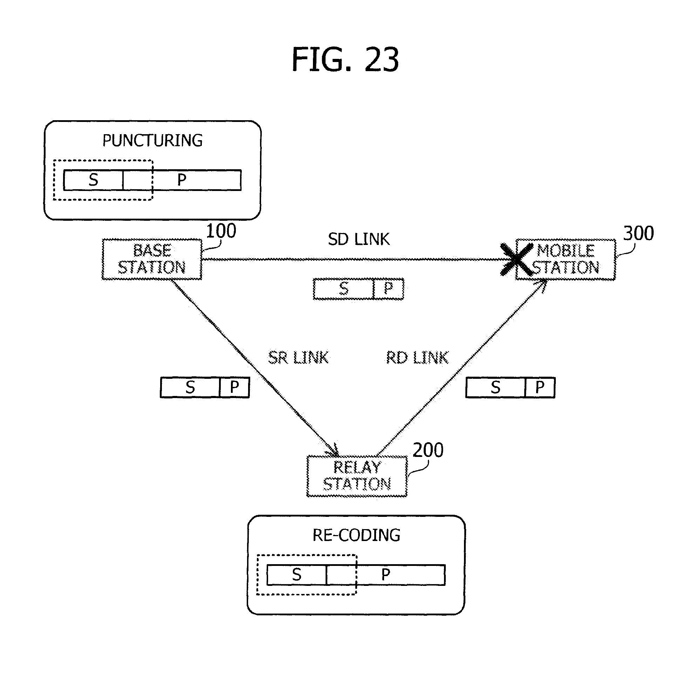

FIG. 23 illustrates data transmission according to the fifth embodiment in the case where a direct path is disabled. As in FIG. 22, it is assumed that each error-correction coded data block contains systematic bits and parity bits at the ratio of 1:2, and that the capacity of a single data transmission is equivalent to one half of the data block length.

The base station 100 extracts all systematic bits and a portion of parity bits from a given data block and sends the extracted bit string by using a radio resource of SD link. Upon receipt of this bit string from the base station 100, the relay station 200 subjects it to decoding and re-coding processes and then transmits the re-coded bit string to the mobile station 300 by using a radio resource of RD link. The mobile station 300 decodes the bit string received from the relay station 200. As the RD link provides a good communication quality, it is unlikely for the mobile station 300 to experience high block error rates.

The relay station 200 may or may not change its puncturing function to extract a different portion of data blocks. In the former case, the relay station 200 may retransmit received signals without decoding or re-coding them. In the latter case, the extracted bit string preferably contains systematic bits. The base station 100 or relay station 200 may be configured to, for example, send some control parameters to instruct the mobile station 300 not to expect signals from the base station 100.

The radio communication system may provide three or more paths between the base station 100 and mobile station 300. While one path may be disabled as a result of the controller's decision, the system can continue, if necessary, to provide diversity transmission and reception using remaining paths. When the direct path is disabled, the controller 160 may choose one reference path from among the remaining relay paths. For example, a relay path with the smallest SNR may be selected as a reference path. The controller 160 then calculates an SNR difference with respect to SNR of that reference path.

In the above-described radio communication system of the fifth embodiment, the base station 100 can stop cooperative diversity depending on the communication quality of SD and RD links, thus making more efficient use of radio resources. The fifth embodiment also alleviates the load of processing receive signals on the part of the mobile station 300.

While the above description has assumed that the base station 100 is responsible for controlling cooperative diversity, the fifth embodiment is not limited to that configuration. Other network devices such as a relay station 200 may be configured to determine whether to activate cooperative diversity. The fifth embodiment may be configured to offer three options (e.g., simple repetition mode, composite mode and selective parity mode) for its relaying mode selection, as in the second embodiment. The fifth embodiment may be applied not only to OFDM systems, but also to other types of radio communication systems.

Sixth Embodiment

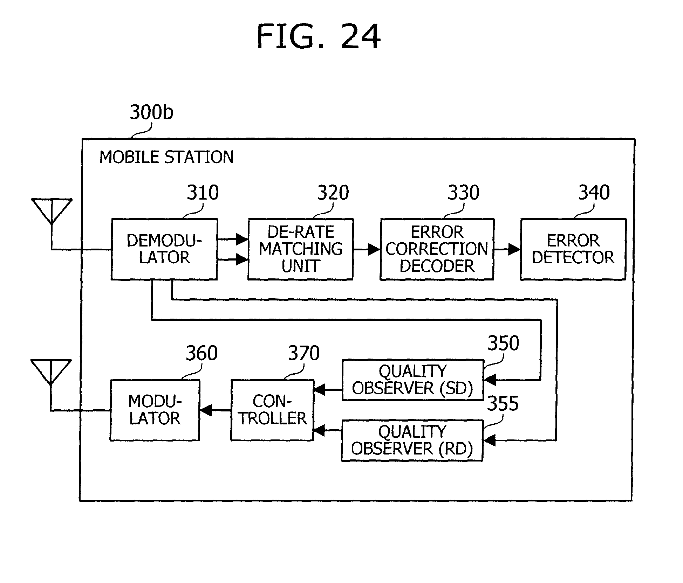

A sixth embodiment of the present invention will now be described below in detail with reference to FIG. 24 and subsequent drawings. Since the sixth embodiment shares some elements with the foregoing first embodiment, the following discussion will focus on their distinctive points, omitting explanations of similar elements. According to the sixth embodiment, the difference of SNR is calculated not in a base station, but in a mobile station.

The radio communication system of the sixth embodiment can be implemented with a system configuration similar to the one that has been illustrated and discussed in FIG. 2 for the first embodiment. The base station and relay station according to the sixth embodiment can also be implemented with a block structure similar to the ones that have been illustrated and discussed in FIGS. 3 and 4 for the first embodiment, Where appropriate, the following description of the sixth embodiment will use the same reference numerals as those used in FIGS. 3 and 4 for the elements of the base station and relay station.

FIG. 24 is a block diagram illustrating a mobile station according to the sixth embodiment. The illustrated mobile station 300b includes the following elements: a demodulator 310, a de-rate matching unit 320, an error correction decoder 330, an error detector 340, quality observers 350 and 355, a modulator 360, and a controller 370. The demodulator 310, de-rate matching unit 320, error correction decoder 330, error detector 340, quality observers 350 and 355, and modulator 360 provide the same functions as their respective counterparts in the foregoing first embodiment.

The controller 370 is coupled to a quality observer 350 to receive its measurement results of communication quality of SD link. The controller 370 is also coupled to another quality observer 355 to receive its measurement results of communication quality of RD link. Those measurements may be provided as quality indicators like SNR and SINR or as CQI values representing such indicators. With a pair of such measurements, the controller 370 calculates a difference of communication quality between the SD link and RD link. Specifically, the controller 370 calculates $(\gamma_1 - \gamma_0)$ as an SNR difference ($\Delta$SNR), where $\gamma_0$ represents SNR of SD link and $\gamma_1$ represents SNR of RD link.

The controller 370 sends feedback data to the modulator 360, which includes a parameter representing the calculated difference, as well as a parameter indicating the communication quality of SD link. The feedback data is transmitted to the base station 100 via the modulator 360. The parameter representing the quality difference may be transmitted together with that indicating the communication quality of SD link. Alternatively, the two parameters may be transmitted separately at different time instants. The mobile station 300b may not have to send information about the SD link quality in the case where the base station 100 does not execute adaptive modulation coding.

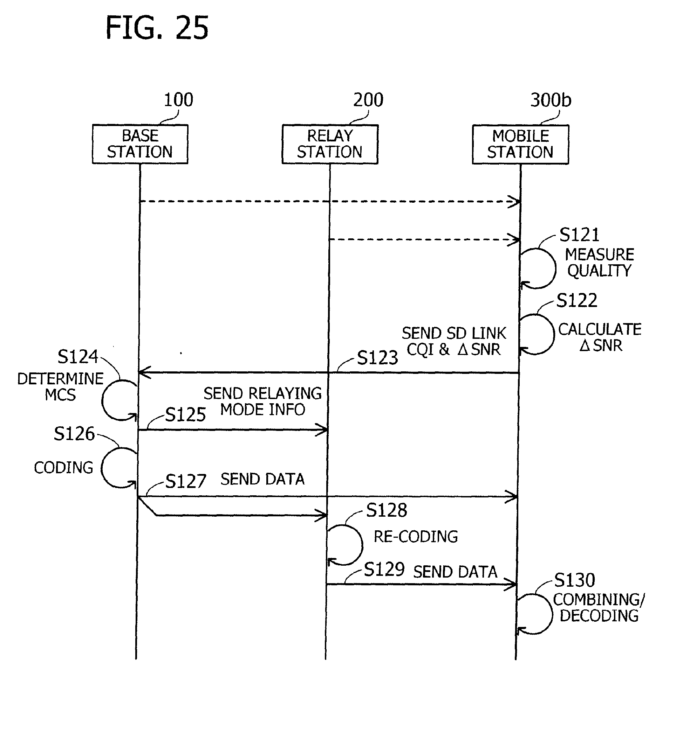

FIG. 25 is a sequence diagram illustrating a flow of messages according to the sixth embodiment. The process illustrated in FIG. 25 includes the following steps:

(Step S121) The mobile station 300b measures SNR of SD link by observing incoming signals from the base station 100. The mobile station 300b also measures SNR of RD link by observing incoming signals from the relay station 200.

(Step S122) The mobile station 300b calculates a difference of SNR between SD link and RD link from the measurements obtained at step S121.

(Step S123) The mobile station 300b sends feedback data to the base station 100. This feedback data includes parameters indicating the SNR difference calculated at step S122 (e.g., CQI value representing the difference) and the CQI value representing the quality measurement obtained at step S121 for SD link.

(Step S124) Based on the SNR difference indicated in the received feedback data, the base station 100 selects an appropriate relaying mode (simple repetition mode or selective parity mode). The base station 100 also determines an appropriate modulation and coding scheme, based on the SNR difference and the communication quality of SD link.

(Step S125) The base station 100 informs the relay station 200 of the relaying mode selected at step S124.

(Step S126) According to the modulation and coding scheme determined at step S124, the base station 100 subjects a given data block to error correction coding, rate matching, and modulation processes, thereby producing a transmit signal.

(Step S127) The base station 100 outputs the transmit signal produced at step S126, using a radio resource of SD link.

(Step S128) Upon receipt of the signal transmitted from the base station 100 at step S127, the relay station 200 handles the received signal according to the relaying mode specified at step S125, thus producing a transmit signal.
(Step S129) By using a radio resource of RD link, the relay station 200 outputs the transmit signal produced at step S128, thus transmitting it via radio waves.
(Step S130) The mobile station 300b demodulates a signal received from the base station 100 at step S127, as well as a signal received from the relay station 200 at step S129. The mobile station 300b combines the resulting bit strings into a single reproduced bit string.

As can be seen from the above sequence, the mobile station 300b calculates a difference of SNR between SD and RD links and informs the base station 100 of the calculated SNR difference. Based on the provided SNR difference, the base station 100 selects a specific relaying mode and notifies the relay station 200 of that selection. The relay station 200 forwards data from the base station 100 according to the relaying mode specified by the base station 100.

In the above-described radio communication system of the sixth embodiment, the base station 100 can use SNR difference values calculated by the mobile station 300b when it selects a relaying mode. This feature alleviates the control workload on the base station 100. The fifth embodiment may be configured to offer three options (e.g., simple repetition mode, composite mode and selective parity mode) for its relaying mode selection, as in the second embodiment.

Seventh Embodiment

A seventh embodiment of the present invention will now be described below in detail with reference to FIG. 24 and subsequent drawings. Since the seventh embodiment shares some elements with the foregoing first embodiment, the following discussion will focus on their distinctive points, omitting explanations of similar elements.

According to the seventh embodiment, the proposed radio communication system applies a technique called hybrid automatic repeat request (HARQ) combining. Suppose, for example, that a mobile station has failed to decode receive data. The mobile station thus requests retransmission, but stores the faulty data for later use, rather than discarding it immediately. When HARQ retransmission is received, the mobile station combines it with the stored data in the hope that the combined data can be decoded correctly. The HARQ combining thus reduces the situations where retransmissions are needed.

The base station punctures transmit data, not only in its first transmission, but also in an optional retransmission of the same data. The base station may determine whether to use the same puncturing scheme or different schemes in those two transmissions, in a similar way to the foregoing selection of relaying modes. In this approach, the two separate transmissions in an HARQ process are analogous to the two distinct radio resources of SD link and RD link discussed in earlier embodiments. Such a radio communication system of the seventh embodiment includes at least a base station and a mobile station. The system may also include relay stations to provide one or more communication paths between the base station and mobile station.

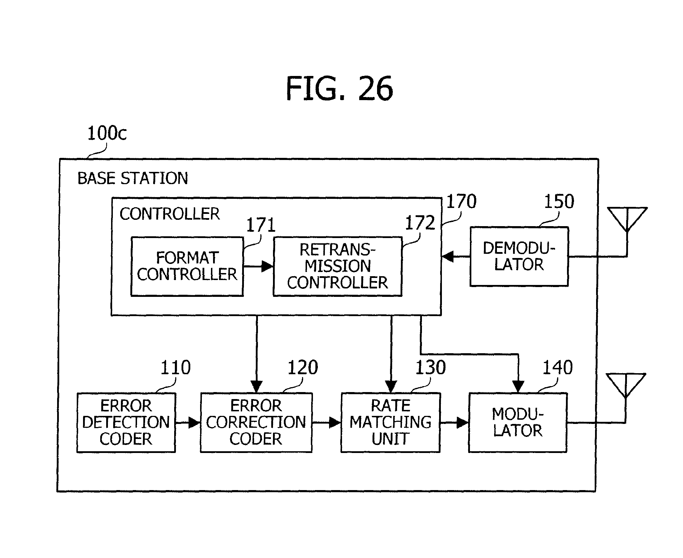

FIG. 26 is a block diagram illustrating a base station according to the seventh embodiment. The illustrated base station 100c includes the following elements: an error detection coder 110, an error correction coder 120, a rate matching unit 130, a modulator 140, a demodulator 150, and a controller 170. The error detection coder 110, error correction coder 120, rate matching unit 130, modulator 140, and demodulator 150 provide the same functions as their respective counterparts in the foregoing base station 100 according to the first embodiment. Note that the rate matching unit 130 in the seventh embodiment is configured to temporarily store an error-correction coded data block until an acknowledgment is received, in preparation for a retransmission request from the mobile station.

The controller 170 controls the error correction coder 120, rate matching unit 130, and modulator 140. To this end, the controller 170 includes a format controller 171 and a retransmission controller 172.

The format controller 171 is coupled to the demodulator 150 to receive feedback data indicating communication quality observed at mobile stations. Based on this feedback data, the format controller 171 determines a modulation and coding scheme. The format controller 171 also uses the same format data to determine a retransmission pattern, i.e., whether to puncture the retransmit data in the same way as it has done for the previous transmit data.

The retransmission controller 172 controls HARQ retransmission. Specifically, the retransmission controller 172 is coupled to the demodulator 150 to receive an acknowledgment (ACK) or a negative acknowledgment (NACK) sent from the mobile station 300c. When an ACK is received, the retransmission controller 172 commands the rate matching unit 130 to transmit the next data block. When an NACK is received, the retransmission controller 172 commands the rate matching unit 130 to retransmit the previous data block. For this transmission or retransmission, the retransmission controller 172 specifies a puncturing scheme to the rate matching unit 130 as determined by the format controller 171.

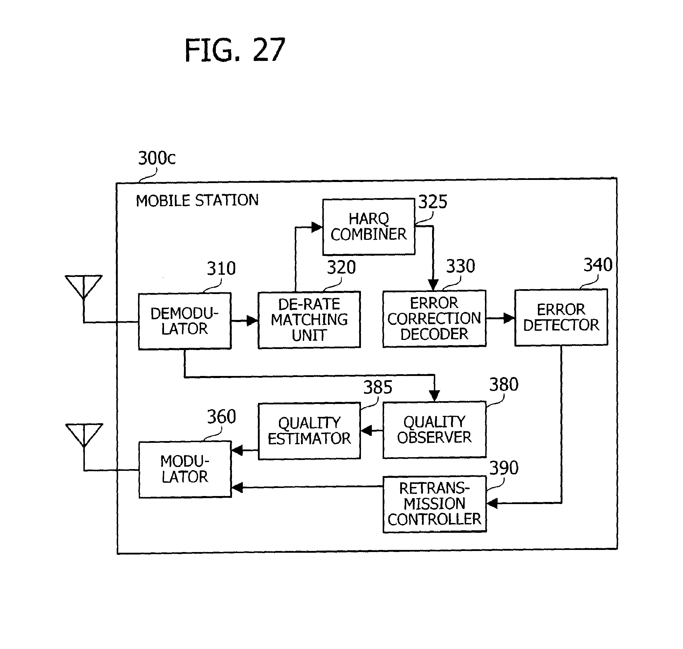

FIG. 27 is a block diagram illustrating a mobile station according to the seventh embodiment. The illustrated mobile station 300c includes the following elements: a demodulator 310, a de-rate matching unit 320, an HARQ combiner 325, an error correction decoder 330, an error detector 340, a modulator 360, a quality observer 380, a quality estimator 385, and a retransmission controller 390. The demodulator 310, de-rate matching unit 320, error correction decoder 330, error detector 340, and modulator 360 provide the same functions as their respective counterparts in the mobile station 300 according to the first embodiment.

The HARQ combiner 325 receives a bit string of a data block from the de-rate matching unit 320. In the case where the received bit string is a first reception of that data block, the HARQ combiner 325 saves the bit string in a temporary data memory (not illustrated), besides supplying the same to the error correction decoder 330. In the case where the received bit string is a second reception (i.e., retransmission) of that data block, the HARQ combiner 325 combines the previous bit string stored in the temporary data memory with the present bit string supplied from the de-rate matching unit 320. The combined bit string is then passed to the error correction decoder 330, besides being used to update the bit string stored in the temporary data memory.

Different methods are used to combine bit strings, depending on the puncturing scheme that the base station 100c applies. In the case of simple repetition mode, for example, the HARQ combiner 325 overlays one bit string on another since the previous reception and the current reception contain the same part of the data block. On the other hand, in the case of selective parity mode, the HARQ combiner 325 concatenates one bit string to another since the two receptions contain different portions of the data block. As mentioned earlier in the first embodiment, the bit strings received in the latter case may not necessarily be exclusive portions of a data block, but may partly overlap with each other.

The quality observer 380 examines known signals received from the demodulator 310 to measure the communication quality of downlink channels (i.e., links in the direction from base station 100c to mobile station 300c). The quality observer 380 supplies the measurement result to the quality estimator 385, where the measurements are represented by using a quality indicator (e.g., SNR, SINR) or CQI.

As a preparation for retransmission, the quality estimator 385 estimates communication quality at the expected time of retransmission (e.g., a predetermined time after the first transmission), based on the communication quality measurements received from the quality observer 380. For example, the quality estimator 385 stores past records of such measurements up to some time before the moment, so that a future quality level can be estimated from the tendency found in those records. The quality estimator 385 sends feedback data to the modulator 360 which indicates the estimated communication quality as well as the present measurement of communication quality.

The quality estimator 385 may transmit the present measurement of communication quality together with the estimated communication quality, or may transmit those two pieces of information separately at different time instants. Or, alternatively, the quality estimator 385 may be configured to inform the base station 100c of the estimated communication quality only when the mobile station 300c is requesting retransmission. The present measurements of communication quality may be transmitted continually regardless of retransmission.

The retransmission controller 390 interacts with the error detector 340 to receive an error detection result of a received data block. If an error is found in the data block, the retransmission controller 390 outputs a signal indicating NACK to the modulator 360 so as to request retransmission of the data block. If no errors are found, the retransmission controller 390 supplies a signal indicating ACK to the modulator 360. The base station 100c thus receives an ACK or NACK response to the data block that it has transmitted.

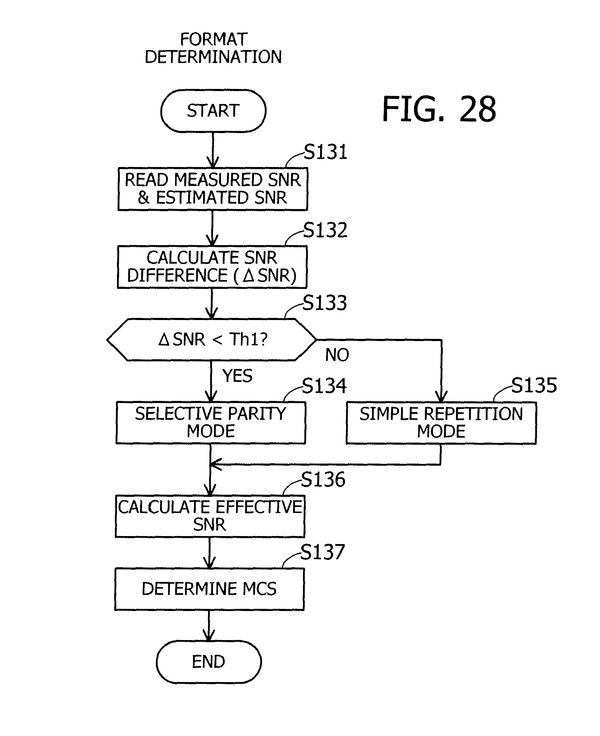

FIG. 28 is a flowchart of a format determination process according to the seventh embodiment. This process is executed repetitively in the base station 100c. The process illustrated in FIG. 28 includes the following steps:

(Step S131) The controller 170 obtains feedback data indicating the current SNR measured at the mobile station 300c and a future SNR estimated by the mobile station 300c for, for example, the expected time of retransmission. The measured SNR and estimated SNR may be received together at the same time, or may be provided separately at different time instants.

(Step S132) The controller 170 calculates a difference of SNR between the original transmission (first transmission) and the retransmission (second transmission). More specifically, the controller 160 calculates $(\gamma_1 - \gamma_0)$ as an SNR difference ($\Delta$SNR), where $\gamma_0$ represents SNR of the first transmission and $\gamma_1$ represents estimated SNR of the second transmission.

(Step S133) The controller 170 determines whether the SNR difference calculated at step S132 is smaller than a predetermined threshold Th1. If so, the process advances to step S134. If not, the process proceeds to step S135.

(Step S134) The controller 170 chooses selective parity mode as the retransmission pattern for the same reasons as in the relaying mode selection discussed in the first embodiment. The process then proceeds to step S136.

(Step S135) The controller 170 chooses simple repetition mode as the retransmission pattern for the same reasons as in the relaying mode selection discussed in the first embodiment. The process then proceeds to step S136.

(Step S136) Using a formula corresponding to the retransmission pattern selected at step S134 or S135, the controller 170 calculates an effective SNR. For example, the foregoing formulas (2) and (3) may be used in this calculation.

(Step S137) The controller 170 determines an appropriate modulation and coding scheme depending on the effective SNR calculated at step S136. According to the determined modulation and coding scheme, the controller 170 controls the error correction coder 120, rate matching unit 130, and modulator 140.

The above steps permit the base station 100c to receive SNR information from a mobile station 300c about the first transmission and second transmission (retransmission) of a data block and select either simple repetition mode or selective parity mode depending on the difference of SNR between the two data transmissions. When simple repetition mode is selected for the second transmission, the base station 100c extracts the same portion of the data block as it has done in the first transmission. When selective parity mode is selected for the second transmission, the base station 100c extracts a different portion of the data block. Such selection of retransmission patterns may be made at every retransmission or on an intermittent basis (at regular or irregular intervals).

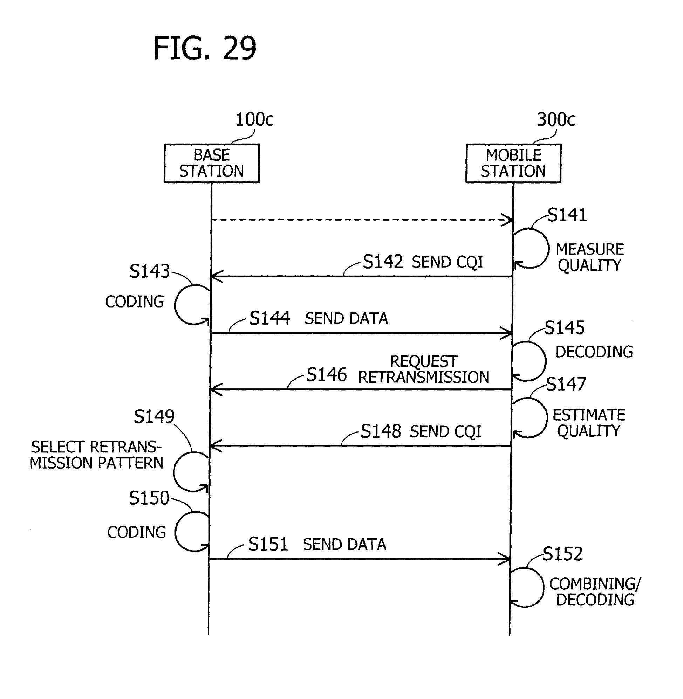

FIG. 29 is a sequence diagram illustrating a flow of messages according to the seventh embodiment. This sequence diagram depicts a situation where the first data transmission of a data block from the base station 100c to the mobile station 300c encounters a bit error, which triggers another data transmission (i.e., retransmission) of the same data block. The process illustrated in FIG. 29 includes the following steps:

(Step S141) The mobile station 300c measures the current SNR by observing incoming signals from the base station 100c.

(Step S142) The mobile station 300c sends feedback data to the base station 100c to deliver a CQI value representing the SNR measured at step S141.

(Step S143) The base station 100c subjects a given data block to error correction coding, rate matching, and modulation, thereby producing a transmit signal. The base station 100c may determine an appropriate modulation and coding scheme based on the feedback data received at step S142 in the case where adaptive modulation coding is applied.

(Step S144) The base station 100c outputs the transmit signal produced at step S143, using a downlink radio resource.

(Step S145) Upon receipt of the signal transmitted from the base station 100c at step S144, the mobile station 300c subjects the signal to demodulation, de-rate matching, and decoding. The resulting data block is then subjected to error detection.

(Step S146) Upon detection of an error in the received data block at step S145, the mobile station 300c sends a retransmission request to the base station 100c.

(Step S147) The mobile station 300c measures the current SNR by observing incoming signals from the base station 100c and, based on those measurements, estimates a future SNR at the time of arrival of retransmitted data.

(Step S148) The mobile station 300c sends feedback data to the base station 100c to deliver a CQI value representing the future SNR estimated at step S147.

(Step S149) Based on the SNR received at step S142 (i.e., measured SNR of the first transmission) and the SNR received at step S148 (i.e., estimated SNR of retransmission), the base station 100c selects an appropriate retransmission pattern (simple repetition mode or selective parity mode).

(Step S150) The base station 100c applies rate matching and modulation to the data block to be retransmitted, thereby producing a transmit signal. During this step, the base station 100c punctures the data block according to the retransmission pattern selected at step S149.

(Step S151) The base station 100c outputs the transmit signal produced at step S150, using another downlink radio resource that is subsequent to the one used at step S144.

(Step S152) The mobile station 300c receives and demodulates the signal transmitted from the base station 100c at step S151. The mobile station 300c then combines the resulting bit string with the bit string obtained at step S145 and decodes the combined bit string. This HARQ combining process involves overlaying or concatenating or both of those operations on given bit strings according to the retransmission pattern that has just been used.

As can be seen from the above sequence, the mobile station 300c informs, upon detection of a data block error, the base station 100c of CQI representing estimated SNR of upcoming retransmission. The base station 100c selects a retransmission pattern, based on this estimated CQI together with a previously reported CQI, and retransmits the data block while puncturing it according to the selected retransmission pattern. The mobile station 300c subjects the previous bit string and the retransmitted bit string to HARQ combining so as to decode them as a whole.

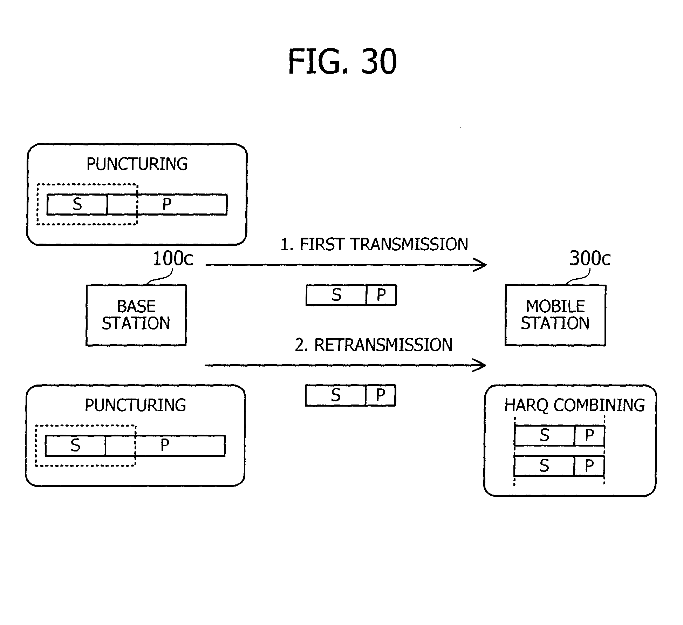

FIG. 30 illustrates data transmission according to the seventh embodiment, particularly in the case where the base station 100c has selected simple repetition mode as the retransmission pattern. It is assumed here that each error-correction coded data block contains systematic bits and parity bits at the ratio of 1:2, and that the capacity of a single data transmission is equivalent to one half of the data block length.

The base station 100c first punctures a data block for transmission, thus extracting all systematic bits and a portion of parity bits. The extracted bit string is transmitted to the mobile station 300c by using a radio resource allocated for the first transmission. The mobile station 300c may then request a retransmission of the data block. Upon receipt of such a request, the base station 100c performs a second puncturing operation to extract the same bit string (i.e., all systematic bits and the same portion of parity bits) from the data block as it has done in the first puncturing. The extracted bit string is transmitted to the mobile station 300c by using a radio resource allocated for the second transmission.

The mobile station 300c combines the first and second bit strings received from the base station 100c into a single bit string by overlaying one on the other (e.g., by adding their receive signal levels) and decodes the HARQ-combined bit string. As a result, the mobile station 300c can receive the benefit of diversity gain of HARQ combining, thus reducing the necessity of retransmissions. Preferably, the bit string that the mobile station 300c receives contains the entire set of systematic bits.

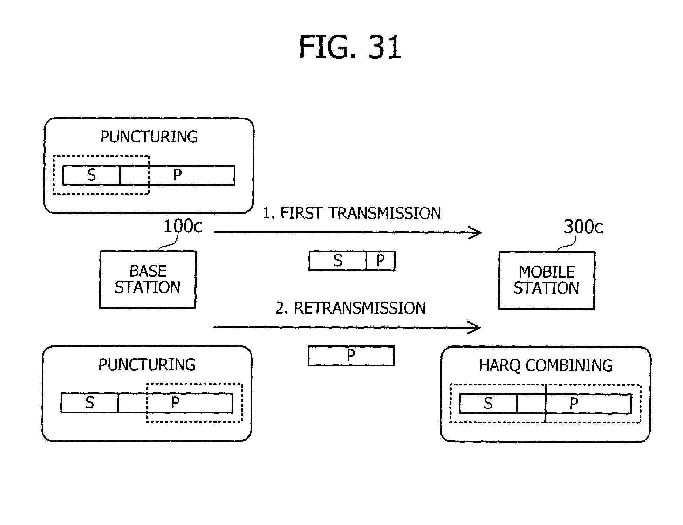

FIG. 31 illustrates data transmission according to the seventh embodiment, particularly in the case where the base station 100c has selected selective parity mode as the retransmission pattern. Similarly to the case of FIG. 30, it is assumed that each error-correction coded data block contains systematic bits and parity bits at the ratio of 1:2, and that the capacity of a single data transmission is equivalent to one half of the data block length.

The base station 100c first punctures a data block for transmission, thus extracting all systematic bits and a portion of parity bits. The extracted bit string is transmitted to the mobile station 300c by using a radio resource allocated for the first transmission. The mobile station 300c may then request a retransmission of the data block. Upon receipt of such a request, the base station 100c performs a second puncturing operation to extract a portion of the data block that has not been selected at the first transmission (e.g., remaining parity bits). The extracted bit string is transmitted to the mobile station 300c by using a radio resource allocated for the second transmission.

The mobile station 300c combines the first and second bit strings received from the base station 100c into a single bit string by concatenating one to the other (e.g., by appending the second bit string to the first bit string) and decodes the HARQ-combined bit string. As a result, the mobile station 300c can receive the benefit of an increased coding gain of HARQ combining, thus reducing the necessity of retransmissions. Preferably, the bit string that the mobile station 300c receives contains the entire set of systematic bits.

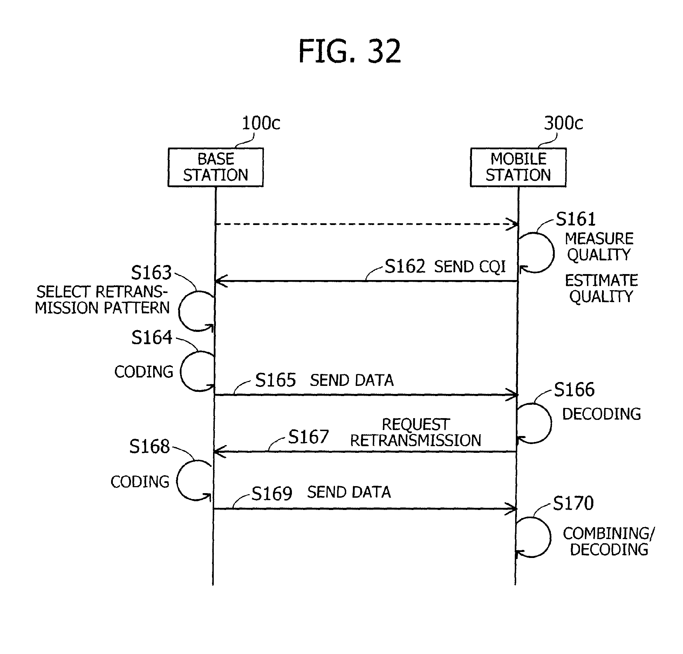

FIG. 32 is a sequence diagram illustrating another message flow according to the seventh embodiment. This sequence is different from the one discussed in FIG. 29 in that the base station 100c selects a retransmission pattern at a different point in the sequence. The process illustrated in FIG. 32 includes the following steps:

(Step S161) The mobile station 300c measures the current SNR by observing incoming signals from the base station 100c. Based on this measurement, the mobile station 300c estimates a future SNR at a possible time of data retransmission.

(Step S162) The mobile station 300c sends feedback data to the base station 100c which includes CQI values representing the measured SNR and estimated SNR obtained at step S161. Those two CQIs may be delivered together at the same time, or may be transmitted separately at different time instants.

(Step S163) Based on the difference between the two SNRs reported at step S162, the base station 100c selects an appropriate retransmission pattern (e.g., simple repetition mode or selective parity mode).

(Step S164) The base station 100c subjects a given data block to error correction coding, rate matching, and modulation, thereby producing a transmit signal.

(Step S165) The base station 100c outputs the transmit signal produced at step S164, using a downlink radio resource.

(Step S166) Upon receipt of the signal transmitted from the base station 100c at step S164, the mobile station 300c subjects the signal to demodulation, de-rate matching, and decoding. The resulting data block is then subjected to error detection.

(Step S167) Upon detection of an error in the received data block at step S166, the mobile station 300c sends a retransmission request to the base station 100c.

(Step S168) The base station 100c applies rate matching and modulation to the data block to be retransmitted, thereby producing a transmit signal. During this step, the base station 100c punctures the data block according to the retransmission pattern selected at step S163.

(Step S169) The base station 100c outputs the transmit signal produced at step S168, using another downlink radio resource that comes later than the one used at step S165.

(Step S170) The mobile station 300c receives and demodulates the signal transmitted from the base station 100c at step S169. The mobile station 300c combines the resulting bit string with the bit string obtained at step S166 and decodes the combined bit string.

As can be seen from the above sequence, the mobile station 300c estimates future SNR before requesting retransmission, thus allowing the base station 100c to select retransmission pattern before executing a first transmission. Accordingly, the seventh embodiment makes it possible to optimize the puncturing at the first transmission, taking into consideration the possibility of retransmission and HARQ combining.

According to the seventh embodiment, the proposed radio communication system permits a mobile station 300c to reproduce the original data by combining retransmitted data with the previous data received with error. During this process, an appropriate retransmission pattern (e.g., simple repetition mode or selective parity mode) is selected according to the difference of communication quality between the previous transmission and subsequent retransmission. As a result, the proposed system increases the gain of HARQ combining, reduces block error rates, and thus achieves a higher throughput.

While the above description of the seventh embodiment has assumed that the mobile station 300c estimates a quality of retransmission, the base station 100c may take on that task of quality estimation. The retransmission may be routed to a path that is different from the first transmission, in the case where a plurality of paths are available between the base station 100c and mobile station 300c. The above-described HARQ control may be applied not only to the downlink data communication, but also to the uplink data communication from the mobile station 300c to the base station 100c. The seventh embodiment may be configured to offer three options (e.g., simple repetition mode, composite mode and selective parity mode) for retransmission pattern selection, as in the second embodiment. Further, the seventh embodiment may also be applied to a radio communication system that allocates radio resources on a block basis as discussed in the third embodiment.

As can be seen from various embodiments discussed above, the proposed communication apparatus, system, and method permit a receiving apparatus to obtain an increased gain when it combines and decodes multiple pieces of receive data.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of embodiments of the invention. Although the embodiment(s) of the present invention has(have) been described in detail, it should be understood that various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1.  A communication apparatus to communicate with a receiving apparatus which receives, combines and decodes first and second data sections as part of a coded data block, the communication apparatus comprising:

    a controller to control a ratio of how much part of the second data section overlaps with the first data section according to a difference of communication quality between a first resource used to transmit the first data section and a second resource used to transmit the second data section.

2.  The communication apparatus according to claim 1, wherein the ratio includes 100%, 0%, and X% where 0<X<100.

3.  The communication apparatus according to claim 1 or 2, wherein the controller sets the ratio to 0% when the difference of communication quality is smaller than a threshold, and to 100% when the difference of communication quality is equal to or greater than the threshold.

4.  The communication apparatus according to claim 1 or 2, wherein:

    the controller sets the ratio to 0% when the difference of communication quality is smaller than a first threshold;
    the controller sets the ratio to X% where 0<X<100, when the difference of communication quality is equal to or greater than the first threshold and smaller than a second threshold; and
    the controller sets the ratio to 100% when the difference of communication quality is equal to or greater than the second threshold.

5.  The communication apparatus according to any of claims 1 to 4, further comprising a transmitter to transmit the first data section by using the first resource, while providing information indicating the ratio to another communication apparatus that transmits the second data section by using the second resource.

6.  The communication apparatus according to any of claims 1 to 4, further comprising a transmitter to transmit the first data section by using the first resource and, in response to a retransmission request from the receiving apparatus, transmit the second data section based on the ratio, by using the second resource which comes later than the first resource.

7. The communication apparatus according to any of claims 1 to 6, wherein the controller determines which modulation and coding scheme to use in transmission of the first and second data sections, based on an estimation of overall communication quality related to the coded data block, including the transmission of the first and second data sections, the estimation being made with an estimation method selected according to the ratio.

8. The communication apparatus according to any of claims 1 to 7, further comprising a receiver to receive, from the receiving apparatus, information about communication quality of individual resource blocks that are usable as at least one of the first and second resources,
wherein the controller calculates a difference of the communication quality, based on current allocation of the resource blocks to the receiving apparatus, as well as on the information received by the receiver.

9. The communication apparatus according to any of claims 1 to 8, further comprising a receiver to receive, from the receiving apparatus, information indicating the difference of communication quality which is measured and calculated at the receiving apparatus,
wherein the controller varies the ratio, based on the difference of communication quality indicated in the information received by the receiver.

10. The communication apparatus according to any of claims 1 to 9, wherein:

    the coded data block includes systematic bits and parity bits; and
    the controller controls extraction of the first and second data sections from the coded data block, such that the first data section will include at least the systematic bits and the second data section will include at least the parity bits.

11. A communication system to communicate with a receiving apparatus which receives, combines and decodes first and second data sections as part of a coded data block, the communication system comprising:

    a transmitting apparatus comprising:

        a controller to control a ratio of how much part of the second data section overlaps with the first data section according to a difference of communication quality between a first resource used to transmit the first data section and a second resource used to transmit the second data section, and
        a transmitter to transmit the first data section by using the first resource, while sending a control parameter indicating the ratio; and
        a relaying apparatus to receive the first data section and the control parameter from the transmitting apparatus, reproduce a data block from the first data section, produce the second data section by extracting a portion of the reproduced data block that corresponds to the ratio indicated by the received control parameter, and send the produced second data section by using the second resource.

12. The communication system according to claim 11, wherein the controller stops transmission of the second data section via the relaying apparatus when the communication quality of the first resource is higher than the communication quality of the second resource.

13. The communication system according to claim 11 or 12, wherein the controller commands the receiving apparatus to stop using the first data section in said combining and decoding when the communication quality of the first resource is smaller than a threshold.

14. The communication system according to any of claims 11 to 13, wherein the controller allocates resource blocks to the receiving apparatus for use as the first and second resources, estimates a first transmission rate of a link between the transmitting apparatus and relaying apparatus and a second transmission rate of a link between the relaying apparatus and the receiving apparatus based on the allocation of the resource blocks, and reduces the resource blocks allocated for the second resource if the first transmission rate is smaller than the second transmission rate.

15. A method for use in a communication system to communicate with a receiving apparatus which receives, combines and decodes first and second data sections as part of a coded data block, the method comprising:

calculating a difference of communication quality between a first resource used to transmit the first data section and a second resource used to transmit the second data section;

varying a ratio of how much part of the second data section overlaps with the first data section according to the difference of communication quality;

transmitting the first data section by using the first resource; and

transmitting the second data section extracted according to the ratio, by using the second resource.

# FIG. 1

[TRANSMISSION#1]

1

COMMUNICATION
APPARATUS

1a

CONTROLLER

1b

TRANSMITTER

[TRANSMISSION#2]

OR

2

RECEIVING
APPARATUS

# FIG. 2

100
BASE STATION

300
MOBILE
STATION

200
RELAY
STATION

# FIG. 3

100

BASE STATION

160
CONTROLLER

150
DEMODULATOR

110
ERROR DETECTION CODER

120
ERROR CORRECTION CODER

130
RATE MATCHING UNIT

140
MODULATOR

# FIG. 4

200

RELAY STATION

```
        210              220              230              240
   ┌──────────┐    ┌──────────┐    ┌──────────┐    ┌──────────┐
   │ DEMODU-  │    │ DE-RATE  │    │  ERROR   │    │  ERROR   │
──→│  LATOR   │──→ │ MATCHING │──→ │CORRECTION│──→ │ DETECTOR │
   │          │    │   UNIT   │    │ DECODER  │    │          │
   └──────────┘    └──────────┘    └──────────┘    └──────────┘

              250              260              270
         ┌──────────┐    ┌──────────┐    ┌──────────┐
         │  ERROR   │    │   RATE   │    │          │
         │CORRECTION│──→ │ MATCHING │──→ │MODULATOR │ ──→
         │  CODER   │    │   UNIT   │    │          │
         └──────────┘    └──────────┘    └──────────┘
                              ↑
                             280
                        ┌──────────┐
                        │CONTROLLER│
                        └──────────┘
```

# FIG. 5

300

MOBILE STATION

310

DEMODU-
LATOR

320

DE-RATE
MATCHING
UNIT

330

ERROR
CORRECTION
DECODER

340

ERROR
DETECTOR

360

MODU-
LATOR

350

QUALITY
OBSERVER (SD)

355

QUALITY
OBSERVER (RD)

FORMAT
DETERMINATION

# FIG. 6

START

OBTAIN SNR
OF EACH LINK ⟋S11

CALCULATE SNR
DIFFERENCE (ΔSNR) ⟋S12

ΔSNR< Th1? ⟋S13 — NO

YES

SELECTIVE PARITY
MODE ⟋S14

SIMPLE REPETITION
MODE ⟋S15

CALCULATE
EFFECTIVE SNR ⟋S16

DETERMINE MCS ⟋S17

SEND INFORMATION
ON SELECTED
RELAYING MODE ⟋S18

END

# FIG. 7

# FIG. 8

# FIG. 9

FIG. 10

FORMAT
DETERMINATION

FIG. 11

```
         ( START )
             │
             ▼            ┌─ S31
    ┌─────────────────┐
    │   OBTAIN SNR    │
    │  OF EACH LINK   │
    └─────────────────┘
             │
             ▼            ┌─ S32
    ┌─────────────────┐
    │  CALCULATE SNR  │
    │ DIFFERENCE (△SNR)│
    └─────────────────┘
             │
             ▼            ┌─ S33
       ╱───────────╲
      ╱  △SNR < Th1? ╲───────────────────┐
      ╲             ╱        NO           │      ┌─ S35
       ╲───────────╱                      ▼
             │                      ╱─────────────────╲
            YES                    ╱   Th1≦△SNR < Th2?  ╲──────────┐
             │                     ╲                    ╱    NO    │
             │                      ╲─────────────────╱           │
             │                              │                     │
             │                             YES                    │
             ▼     ┌─ S34                   ▼    ┌─ S36            ▼    ┌─ S37
    ┌─────────────────┐          ┌─────────────────┐    ┌─────────────────────┐
    │ SELECTIVE PARITY│          │    COMPOSITE    │    │  SIMPLE REPETITION  │
    │      MODE       │          │      MODE       │    │        MODE         │
    └─────────────────┘          └─────────────────┘    └─────────────────────┘
             │                            │                       │
             ▼◄───────────────────────────┴───────────────────────┘
             │            ┌─ S38
    ┌─────────────────┐
    │    CALCULATE    │
    │  EFFECTIVE SNR  │
    └─────────────────┘
             │
             ▼            ┌─ S39
    ┌─────────────────┐
    │  DETERMINE MCS  │
    └─────────────────┘
             │
             ▼            ┌─ S40
    ┌─────────────────┐
    │ SEND INFORMATION│
    │   ON SELECTED   │
    │  RELAYING MODE  │
    └─────────────────┘
             │
             ▼
         (  END  )
```

# FIG. 12

PUNCTURING

| S | | P |

COMBINING

| S | P |
| S | P |

BASE
STATION  100

SD LINK

| S | P |

MOBILE
STATION  300

SR LINK          RD LINK

| S | P |                    | S | P |

RELAY
STATION  200

RE-CODING

| S | | P |

# FIG. 13

# FIG. 14

# FIG. 15

FRAME (10 ms)

SUB-FRAME (1 ms)

FREQUENCY

SYMBOL

SUBCARRIER

RESOURCE
ELEMENT

RESOURCE
BLOCK

TIME

FORMAT
DETERMINATION

FIG. 16

START

S41
OBTAIN SNR OF EACH
RESOURCE BLOCK

S42
ALLOCATE RESOURCES
TO MOBILE STATIONS

S43
ALL STATIONS DONE? ──YES──→ S50
SEND INFORMATION ON
ALLOCATED RESOURCES
AND SELECTED
RELAYING MODE

END

NO

S44
CALCULATE SNR
DIFFERENCE ($\Delta$SNR)
OF ALLOCATED
RESOURCE

S45
$\Delta$SNR < Th1? ──NO──→ S47
SIMPLE REPETITION
MODE

YES

S46
SELECTIVE PARITY
MODE

S48
CALCULATE
EFFECTIVE SNR

S49
DETERMINE MCS

# FIG. 17

# FIG. 18

FORMAT
DETERMINATION

FIG. 19

START

S61

OBTAIN SNR OF EACH
RESOURCE BLOCK

S62

ALLOCATE RESOURCES
TO MOBILE STATIONS

S73

SEND INFORMATION ON
ALLOCATED RESOURCES
AND SELECTED
RELAYING MODE

S63

ALL STATIONS DONE?

YES

NO

END

S64

CALCULATE SNR
DIFFERENCE ( Δ SNR)
OF ALLOCATED
RESOURCE

S65

Δ SNR < Th1?

NO

YES

S66

SELECTIVE PARITY
MODE

S67

SIMPLE REPETITION
MODE

S68

CALCULATE
EFFECTIVE SNR

S69

DETERMINE MCS

S70

SR RATE<RD RATE?

NO

YES

S71

CHANGE
ALLOCATION

S72

CHANGE MCS

# FIG. 20

FORMAT
DETERMINATION

# FIG. 21

```
        ( START )
            │
            ▼  ┌─ S101
   ┌─────────────────────┐
   │ OBTAIN SNR OF EACH  │
   │   RESOURCE BLOCK    │
   └─────────────────────┘
            │
            ▼  ┌─ S102
   ┌─────────────────────┐
   │ ALLOCATE RESOURCES  │
   │  TO MOBILE STATIONS │
   └─────────────────────┘
            │
            ▼  ┌─ S103
     ◇ ALL STATIONS DONE? ◇──── YES ──┐
            │                         │  ┌─ S113
            │ NO                      ▼
            │              ┌──────────────────────┐
            ▼  ┌─ S104     │ SEND INFORMATION ON  │
     ◇ SNR OF SD LINK>Th3? ◇  │ ALLOCATED RESOURCES │
            │        NO    │ AND SELECTED RELAYING│
            │ YES          │        MODE          │
            ▼              └──────────────────────┘
   ┌─────────────────────┐            │
   │ CALCULATE SNR       │ S105       ▼
   │ DIFFERENCE (ΔSNR)   │         ( END )
   │ OF ALLOCATED        │
   │ RESOURCE            │
   └─────────────────────┘
            │  ┌─ S106          ┌─ S107
            ▼          YES  ┌──────────────────┐
       ◇ ΔSNR < Th4? ◇──────▶│ RELEASE RESOURCES│
            │               │ ALLOCATED FOR    │
            │ NO            │ RELAYING DATA    │
            ▼  ┌─ S108      └──────────────────┘
   ◇ Th4≦ ΔSNR <Th1? ◇──── NO ──┐
            │                   │
            │ YES  ┌─ S109      ▼  ┌─ S110
   ┌───────────────┐   ┌──────────────────┐
   │ SELECTIVE     │   │ SIMPLE REPETITION│
   │ PARITY MODE   │   │      MODE        │
   └───────────────┘   └──────────────────┘
            │               │
            ▼  ┌─ S111
   ┌─────────────────────┐
   │ CALCULATE EFFECTIVE │
   │        SNR          │
   └─────────────────────┘
            │  ┌─ S112
            ▼
   ┌─────────────────────┐
   │    DETERMINE MCS    │
   └─────────────────────┘
```

# FIG. 22

# FIG. 23

PUNCTURING

| S | P |

100

BASE STATION

SD LINK

| S | P |

MOBILE STATION 300

SR LINK

| S | P |

RD LINK

| S | P |

RELAY STATION 200

RE-CODING

| S | P |

# FIG. 24

300b

MOBILE STATION

DEMODU-LATOR `310` → DE-RATE MATCHING UNIT `320` → ERROR CORRECTION DECODER `330` → ERROR DETECTOR `340`

QUALITY OBSERVER (SD) `350`

QUALITY OBSERVER (RD) `355`

MODU-LATOR `360` ← CON-TROLLER `370` ←

# FIG. 25

# FIG. 26

# FIG. 27

FORMAT
DETERMINATION

FIG. 28

START

↓ S131

READ MEASURED SNR
& ESTIMATED SNR

↓ S132

CALCULATE SNR
DIFFERENCE (Δ SNR)

↓ S133

Δ SNR < Th1?

YES ↓ S134    NO →

SELECTIVE PARITY
MODE

S135

SIMPLE REPETITION
MODE

↓ S136

CALCULATE EFFECTIVE
SNR

↓ S137

DETERMINE MCS

↓

END

54

# FIG. 29

# FIG. 30

# FIG. 31

# FIG. 32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007043690 A

### Non-patent literature cited in the description

- **J. N. Laneman ; D. N. C. Tse ; G. W. Wornell.** Co-operative Diversity in Wireless Networks: Efficient Protocols and Outage Behavior. *IEEE Transactions on Information Theory,* December 2004, vol. 50 (12), 3062-3080
- **Nosratinia.** Cooperation Diversity through coding. *Proc. IEEE 2002 International Symposium on Information Theory,* June 2002, 220
- **J. N. Laneman ; D. N. C. Tse ; G. W. Wornell.** Co-operative Diversity in Wireless Networks: Efficient Protocols and Outage Behavior. *IEEE Transactions on Information Theory,* 2004, vol. 50 (12), 3062-3080
- **T. E. Hunter ; A. Nosratinia.** Cooperation Diversity through coding. *Proc. IEEE 2002 International Symposium on Information Theory,* 2002, 220
- **L. Wan ; S. Tsai ; M. Almergn.** A fading-insensitive performance metric for a unified link quality model. *IEEE 2006 Wireless Communications and Networking Conference,* 2006, vol. 4, 2110-2114
- **K. Brueninghaus et al.** Link performance models for system level simulations of broadband radio access systems. *IEEE 16th International Symposium on Personal, Indoor and Mobile Radio Communications,* 2005, vol. 4, 2306-2311